(19) Europäisches Patentamt
European Patent Office
Office européen des brevets

(11) EP 2 938 585 B1

(12) **EUROPEAN PATENT SPECIFICATION**

(45) Date of publication and mention
of the grant of the patent:
**09.10.2019 Bulletin 2019/41**

(21) Application number: **13815786.2**

(22) Date of filing: **30.12.2013**

(51) Int Cl.:
*C03C 17/22* (2006.01)     *C01F 11/22* (2006.01)
*C08J 7/04* (2006.01)      *G02B 1/11* (2015.01)
*C23C 18/12* (2006.01)

(86) International application number:
**PCT/EP2013/078145**

(87) International publication number:
**WO 2014/102380 (03.07.2014 Gazette 2014/27)**

(54) **MAGNESIUM FLUORIDE SOL AND OPTICALLY ACTIVE SURFACE COATINGS DERIVED THEREOF**

MAGNESIUMFLUORIDLÖSUNG UND DARAUS GEWONNENE OPTISCH AKTIVE
OBERFLÄCHENBESCHICHTUNGEN

SOL DE FLUORURE DE MAGNÉSIUM ET REVÊTEMENTS DE SURFACE OPTIQUEMENT ACTIFS
ISSUS DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.12.2012 EP 12199836
21.06.2013 PCT/EP2013/063084**

(43) Date of publication of application:
**04.11.2015 Bulletin 2015/45**

(73) Proprietor: **Nanofluor GmbH
12489 Berlin (DE)**

(72) Inventor: **KEMNITZ, Erhard
10405 Berlin (DE)**

(74) Representative: **Schulz Junghans
Patentanwälte PartGmbB
Großbeerenstraße 71
10963 Berlin (DE)**

(56) References cited:
**EP-A1- 1 586 542       EP-A1- 2 253 590
EP-A1- 2 708 510        US-A1- 2002 191 168
US-A1- 2011 122 497**

- **THOMAS I M: "POROUS FLUORIDE
  ANTIREFLECTIVE COATINGS", APPLIED
  OPTICS, OPTICAL SOCIETY OF AMERICA,
  WASHINGTON, DC; US, vol. 27, no. 16, 15 August
  1988 (1988-08-15), pages 3356-3358,
  XP000001878, ISSN: 0003-6935, DOI:
  10.1364/AO.27.003356**
- **RUDIGER ET AL: "Non-aqueous sol-gel
  synthesis of nano-structured metal fluorides",
  JOURNAL OF FLUORINE CHEMISTRY,
  ELSEVIER, NL, vol. 128, no. 4, 23 March 2007
  (2007-03-23), pages 353-368, XP005934892, ISSN:
  0022-1139, DOI:
  10.1016/J.JFLUCHEM.2006.11.006**

**Description**

The present invention relates to $MgF_2$ sols, processes for their synthesis and methods for manufacturing optically active surface coatings comprising $MgF_2$ as optically active component. The invention also encompasses solar panels, architectural glass, optical systems and lenses coated by the surface coatings of the invention.

The reflection of visible light passing through an optically transparent substrate (e. g., glass) can be reduced by coating the substrate with an optical active thin layer exhibiting a refractive index laying between the refractive index of the substrate ($n_s \sim 1.5$ in case of glass) and that of air ($n_{air} = 1$).

One critical parameter in the technical scale application of sol solutions is the stability and concentration of the solution. Desirable features of technical products for high volume applications such as processing architectural glass or photovoltaic modules are a long shelf life, insensitivity against changing environmental conditions during storage and transport, and high uniformity between lots.

Multi-layer systems (interference layers, usually alternating layers of high reflective $TiO_2$- and low reflective $SiO_2$-films) can attain favorable anti-reflective properties, however, such systems suffer from high production costs and complex methods of manufacture.

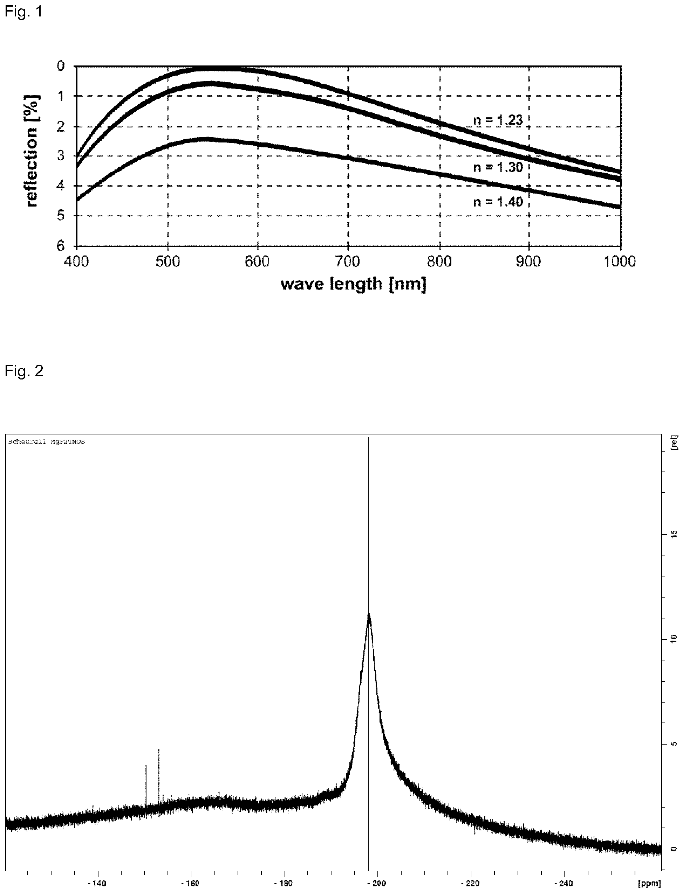

An ideal single layer coating material would have a refractive index around $n_c \sim 1,23$, resulting in a nearly 100% optically transparent system (see Fig. 1). Anti-reflective (AR) oxide monolayers are known. However, since the oxide material with the lowest refractive index is $SiO_2$ ($n_{SiO2} \sim 1.46$), porosity has to be introduced into such layers. Of the porous layer materials known in the art, only those having a 50% porosity or higher achieve a refractive index of around $n=1.23$, resulting in low mechanic stability. DE 10 2007 058927 A1 describes a method for obtaining porous layers.

Some metal fluorides exhibit refractive indices significantly lower than $SiO_2$, with magnesium fluoride being the most investigated material ($n_{MgF2} = 1.38$).

Metal fluoride layers generated from liquid phase deposition were described first based on metal trifluoroacetate sols (S. Fujihara, in Handbook of Sol-Gel Science and Technology, ed. S. Sakka, Kluwer, Boston, 2005, vol. 1, pp. 203-224). In a first step, the metal fluoride trifluoroactetates are deposited onto the substrate and are subsequently decomposed thermally, resulting in very porous metal fluoride layers. Due to the formation of hydrogen fluoride during the thermal decomposition process and resultant shrinking of the layer thickness, an adjustment of the parameters of such layers is difficult. Moreover, the coated substrate and the equipment suffer from exposure to HF released in this process. The resulting layer performs unsatisfactory mechanically.

State of the art methods for the technical scale production of magnesium fluoride sol solutions rely on reacting magnesium acetate or methoxide with aqueous hydrofluoric acid in methanol at elevated temperatures under high pressure. Such processes suffer from significant disadvantages when applied in technical scale, such as the need for high pressure batch reactions and the use of methanol, which is toxic. US 6,880,602B2 (EP 1 315 005 B1) show a process for obtaining sol solutions of magnesium fluoride by heating magnesium fluoride sols under pressure to above 100°C. WO 2011/116980 A1 and US 2011/0122497 A1 (EP 1 791 002 A1) show $MgF_2$-sols obtained by a high pressure process, with added $SiO_2$-sols as "binders", which results in acceptable optical and mechanical characteristics of the layers. EP 2 253 590 A1 shows magnesium-containing organosols and their use as surface coatings aiming to increase the hydrophilicity of the surface.

Furthermore, depending on the concentration of the solution and the parameters of the synthetic process, the solutions provided by high pressure processes tend to have a short shelf-life.

Other properties such as scratch resistance, mechanic stability, thermal stability and hydrolysis resistance are important for applications such as coatings of glass or polymers.

Vapor phase deposition methods such as sputtering can be employed for film deposition. Thin layers obtained thereby do usually not show significant porosity, resulting in a refractive index of close to or corresponding to that of the bulk material. Vapor phase deposited $MgF_2$-layers suffer from non-stoichiometric adjustment of metal to fluorine ratios, leading to point defects ("F-center") formation, resulting in impaired optical quality of the layer. Evaporation methods may aid in overcoming this problem, however large area depositions are not facilitated thereby because of point defect formation. The introduction of necessary porosity is insufficient in both methods.

The present invention aims at the preparation of low refractive index antireflective layers that overcome the drawbacks of the state of the art. This problem is solved by the methods, sol solutions, preparations and coatings as described by the independent claims.

A first aspect of the invention is set out in claim 1.

A second aspect of the invention is set out in present claim 2.

A magnesium carboxylate in the context of the present specification is a magnesium salt of a carboxylic acid, in particular a carboxylic acid described by a general formula R-COOH, wherein R is a branched or linear, substituted or unsubstituted alkyl, cycloalkyl or a substituted or unsubstituted aryl or heteroaryl. In some embodiments, R is a C1 to C6 Alkyl or cycloalkyl. In some embodiments, R is methyl (the carboxylate being an acetate) or hydroxyethyl (=> lactate) or its higher alkane homologues.

A magnesium alcoholate in the context of the present specification is a magnesium salt of an aliphatic or aromatic alcohol, in particular an alcohol described by a general formula R-OH, wherein R has the meaning described in the preceding paragraph.

In some embodiments, according to the first aspect of the invention, a metal additive is added before, during or after step b), wherein said metal additive is calcium, in form of a calcium precursor, wherein the amount of said calcium additive, in relation to the amount of said magnesium precursor is 1 : 100 to 1 : 1 (1 % to 50 %), as measured in molar equivalent of said calcium additive to said magnesium precursor, and wherein additionally 1.85 to 2.05 molar equivalents of anhydrous hydrogen fluoride ($n_{HFc}$) per mole calcium additive is present in said second volume, wherein the magnesium precursor is a magnesium carboxylate, in particular a magnesium acetate or magnesium lactate.

In some embodiments, according to the first aspect of the invention, a metal additive is added before, during or after step b), wherein said metal additive is calcium, in form of a calcium precursor, wherein the amount of said calcium additive, in relation to the amount of said magnesium precursor is 1 : 100 to 3 : 10 (1 % to 30 %), in particular 1 : 10 to 1 : 4 (10 % to 25 %), as measured in molar equivalent of said calcium additive to said magnesium precursor, and wherein additionally 1.85 to 2.05 molar equivalents of anhydrous hydrogen fluoride ($n_{HFc}$) per mole calcium additive is present in said second volume, wherein the magnesium precursor is a magnesium carboxylate, in particular a magnesium acetate or magnesium lactate.

In some embodiments, according to the first aspect of the invention, a metal additive is added before, during or after step b), wherein said metal additive is calcium, in form of a calcium precursor, wherein the amount of said calcium additive, in relation to the amount of said magnesium precursor is more than 1 : 5 up to 1 : 1 (>20 % up to 50 %), as measured in molar equivalent of said calcium additive to said magnesium precursor, and wherein additionally 1.85 to 2.05 molar equivalents of anhydrous hydrogen fluoride ($n_{HFc}$) per mole calcium additive is present in said second volume, wherein the magnesium precursor is a magnesium carboxylate, in particular a magnesium acetate or magnesium lactate.

In some embodiments, according to the first aspect of the invention, a metal additive is added before, during or after step b), wherein said metal additive is calcium, in form of a calcium precursor, wherein the amount of said calcium additive, in relation to the amount of said magnesium precursor is >20 % (more than 20 %) to <50 % (less than 50 %) as measured in molar equivalent of said calcium additive to said magnesium precursor, and wherein additionally 1.85 to 2.05 molar equivalents of anhydrous hydrogen fluoride ($n_{HFc}$) per mole calcium additive is present in said second volume, wherein the magnesium precursor is a magnesium carboxylate, in particular a magnesium acetate or magnesium lactate.

In some embodiments, according to the first aspect of the invention, a metal additive is added before, during or after step b), wherein said metal additive is calcium, in form of a calcium precursor, wherein the amount of said calcium additive, in relation to the amount of said magnesium precursor is 25 % to 50 %, in particular 25 % to <50 % (less than 50 %), more particularly 25 % to 35 %, as measured in molar equivalent of said calcium additive to said magnesium precursor, and wherein additionally 1.85 to 2.05 molar equivalents of anhydrous hydrogen fluoride ($n_{HFc}$) per mole calcium additive is present in said second volume, wherein the magnesium precursor is a magnesium carboxylate, in particular a magnesium acetate or magnesium lactate.

In some embodiments, according to the second aspect of the invention, a metal additive is added before, during or after step b), wherein said metal additive is calcium, in form of a calcium precursor, wherein the amount of said calcium additive is 1 : 100 up to less than 1 : 1 (<50 %), in relation to the amount of said magnesium precursor as measured in molar equivalent of said calcium additive to said magnesium precursor and wherein additionally 1.85 to 2.05 molar equivalents of anhydrous hydrogen fluoride ($n_{HFc}$) per mole calcium additive is present.

In some embodiments, according to the second aspect of the invention, a metal additive is added before, during or after step b), wherein said metal additive is calcium, in form of a calcium precursor, wherein the amount of said calcium additive is 1 : 100 to 3 : 10, in particular 1 : 10 to 1 : 4 (10 % to 25 %), in relation to the amount of said magnesium precursor as measured in molar equivalent of said calcium additive to said magnesium precursor and wherein additionally 1.85 to 2.05 molar equivalents of anhydrous hydrogen fluoride ($n_{HFc}$) per mole calcium additive is present.

In some embodiments, according to the second aspect of the invention, a metal additive is added before, during or after step b), wherein said metal additive is calcium, in form of a calcium precursor, wherein the amount of said calcium additive is more than 1 : 5 (> 20 %) up to 1 : 1 (50%), in relation to the amount of said magnesium precursor as measured in molar equivalent of said calcium additive to said magnesium precursor, and wherein additionally 1.85 to 2.05 molar equivalents of anhydrous hydrogen fluoride ($n_{HFc}$) per mole calcium additive is present.

In some embodiments, according to the second aspect of the invention, a metal additive is added before, during or after step b), wherein said metal additive is calcium, in form of a calcium precursor, wherein the amount of said calcium additive is more than 1 : 5 (> 20 %) up to less than 1 : 1 (<50%), in relation to the amount of said magnesium precursor as measured in molar equivalent of said calcium additive to said magnesium precursor, and wherein additionally 1.85 to 2.05 molar equivalents of anhydrous hydrogen fluoride ($n_{HFc}$) per mole calcium additive is present.

In some embodiments, according to the second aspect of the invention, a metal additive is added before, during or after step b), wherein said metal additive is calcium, in form of a calcium precursor, wherein the amount of said calcium additive, in relation to the amount of said magnesium precursor is 25 % to 50 %, in particular 25 % to <50 % (less than 50 %), more particularly 25 % to 35 %, as measured in molar equivalent of said calcium additive to said magnesium precursor, and wherein additionally 1.85 to 2.05 molar equivalents of anhydrous hydrogen fluoride ($n_{HFc}$) per mole calcium additive is present in said second volume.

In some embodiments, according to the second aspect of the invention, said magnesium precursor is a magnesium alcoholate and a metal additive is added before, during or after step b), wherein said metal additive is calcium, in form of a calcium precursor, wherein the amount of said calcium additive is more than 1 : 5 (> 20 %) up to 1 : 1 (50%), in relation to the amount of said magnesium precursor as measured in molar equivalent of said calcium additive to said magnesium precursor, and wherein additionally 1.85 to 2.05 molar equivalents of anhydrous hydrogen fluoride ($n_{HFc}$) per mole calcium additive is present.

In some embodiments, according to the second aspect of the invention, said magnesium precursor is a magnesium alcoholate and a metal additive is added before, during or after step b), wherein said metal additive is calcium, in form of a calcium precursor, wherein the amount of said calcium additive is more than 1 : 5 (> 20 %) up to less than 1 : 1 (<50%), in relation to the amount of said magnesium precursor as measured in molar equivalent of said calcium additive to said magnesium precursor, and wherein additionally 1.85 to 2.05 molar equivalents of anhydrous hydrogen fluoride ($n_{HFc}$) per mole calcium additive is present.

In some embodiments, according to the first aspect of the invention, said magnesium precursor is a magnesium alcoholate and a metal additive is added before, during or after step b), wherein said metal additive is calcium, in form of a calcium precursor, wherein the amount of said calcium additive is more than 1 : 5 (> 20 %) up to 3 : 10 (30%), in relation to the amount of said magnesium precursor as measured in molar equivalent of said calcium additive to said magnesium precursor, and wherein additionally 1.85 to 2.05 molar equivalents of anhydrous hydrogen fluoride ($n_{HFc}$) per mole calcium additive is present.

In some embodiments, according to the second aspect of the invention, said magnesium precursor is a magnesium alcoholate and a metal additive is added before, during or after step b), wherein said metal additive is calcium, in form of a calcium precursor, wherein the amount of said calcium additive, in relation to the amount of said magnesium precursor is 25 % to 50 %, in particular 25 % to <50 % (less than 50 %), more particularly 25 % to 35 %, as measured in molar equivalent of said calcium additive to said magnesium precursor, and wherein additionally 1.85 to 2.05 molar equivalents of anhydrous hydrogen fluoride ($n_{HFc}$) per mole calcium additive is present in said second volume.

In some embodiments, according to the first aspect of the invention, a metal additive is added before, during or after step b), wherein said metal additive is calcium, in form of a calcium precursor, wherein the amount of said calcium additive, in relation to the amount of magnesium, is 1 : 100 to 1 : 5, as measured in molar equivalent of said metal additive to magnesium, wherein

- an additional amount of hydrogen fluoride ($n_{adHF}$) is present in step b computed according to the formula

$$n_{adHF} = (n_M * \chi_{additive}) * Ox * A,$$

wherein

- $n_M$ is the molar amount of magnesium,

- $\chi_{additive}$ is the molar percentage of said metal additive in relation to $n_M$,

- $\chi_{additive}$ is in the range of 1 % to 20 %,

- Ox is the number characterizing the oxidation state of said metal additive, and

- A is selected from $0 \leq A \leq 1$.

In some embodiments, according to the first aspect of the invention, at least one metal additive, selected from the group of lithium, calcium, antimony, tin, magnesium, strontium, aluminium, silicium, zirconium, titanium or zinc, is added in form of a metal additive precursor before, during or after step b), wherein the amount of said metal additive precursor, in relation to the amount of magnesium, is 1 : 100 to 1 : 5, as measured in molar equivalent of said metal additive to magnesium, wherein

- an additional amount of hydrogen fluoride ($n_{adHF}$) is present in step b computed according to the formula

$$n_{adHF} = (n_M * \chi_{additive}) * Ox * A,$$

wherein

- $n_M$ is the molar amount of magnesium,

- $\chi_{additive}$ is the molar percentage of said metal additive in relation to $n_M$,

- $\chi_{additive}$ is in the range of 1 % to 20 %,

- Ox is the number characterizing the oxidation state of said metal additive, and

- A is selected from $0 \leq A \leq 1$.

In some embodiments, according to the first or second aspect of the invention, at least one metal additive, selected from the group of lithium, antimony, tin, magnesium, strontium, aluminium, silicium, zirconium, titanium or zinc, is added additionally to a calcium additive in form of a metal additive precursor before, during or after step b), wherein the amount of said metal additive precursor, in relation to the amount of magnesium and calcium, is 1 : 100 to 1 : 5, as measured in molar equivalent of said metal additive to the sum of magnesium and calcium, wherein

- an additional amount of hydrogen fluoride ($n_{adHF}$) is present in step b computed according to the formula

$$n_{adHF} = (n_M * \chi_{additive}) * Ox * A,$$

wherein

- $n_M$ is the sum of the molar amounts of magnesium and calcium,

- $\chi_{additive}$ is the molar percentage of said metal additive in relation to $n_M$,

- $\chi_{additive}$ is in the range of 1 % to 20 %, and

- Ox is the number characterizing the oxidation state of said metal additive, and

- A is selected from $0 \leq A \leq 1$.

The $MgF_2$ sols of the invention are synthesized by reacting a solution of a suitable magnesium salt precursor, such as -by way of non-limiting example- an alcoholate, carboxylate, chloride or nitrate, in organic water-free solvents like alcohols, polyalcohols, ethers, esters, and mixtures thereof with anhydrous hydrogen fluoride (HF). The HF is provided in gaseous or in liquid form or as solution in a solvent as aforementioned. Alternatively a calcium additive and/or a metal additive may be present.

In some embodiments, the $MgF_2$ sols of the invention are synthesized by reacting a solution of magnesium carboxylate, in particular magnesium acetate or magnesium lactate, in organic water-free solvents such as, by way of non-limiting example, alcohols, polyalcohols, ethers, esters, and mixtures thereof with anhydrous hydrogen fluoride (HF). The HF is provided in gaseous or in liquid form or as solution in a solvent as aforementioned. Other possible embodiments make use of magnesium formiate, magnesium oxalate or magnesium citrate.

The method according to the invention differs from methods known in the art by carefully controlling the water content of the reaction volume (i.e., the water content of the magnesium carboxylate, in particular magnesium acetate or magnesium lactate, and its solvent, the water content of the HF added, and the amount of water resulting from the reaction and further reactions downstream (such as a reaction between the magnesium precursor ligand and the solvent), for example, from a reaction between the carboxylic acids, in particular the acetic acid or lactic acid, produced during the reaction of carboxylate, in particular acetate or lactate, and HF, and the solvent.

In some embodiments, the reaction is performed at room temperature and ambient pressure. These conditions are of great advantage by facilitating large (technical) scale continuous processes, in contrast to the batch scale processes known in the art.

In some embodiments, step b. is performed under vigorous stirring. In some embodiments the stirring speed is in the range of 100 rpm to 1000 rpm, in particular 600 rpm to 1000 rpm.

In some embodiments, the stirring speed exceeds 100 rpm, 200 rpm, 300 rpm, 400 rpm, 500 rpm, 600 rpm, 700 rpm, 800 rpm, 900 rpm or 1000 rpm, in particular the stirring speed exceeds 600 rpm, 700 rpm, 800 rpm, 900 rpm or 1000 rpm. As a rule, the higher the stirring speed the better intermediate formation of geleous particles will be suppressed and the faster the reaction mixture clears up. Hence, even energy impact by e.g. Ultraturrax application is beneficial.

In some embodiments, the reaction volume resulting from the second volume being added to the first volume is stirred for 8 hours or 1, 2, 3, 4, 5, 6, 7, 8, 9, 10, 11, 12, 13, 14, 15, 16, 17, 18, 19, 20, 21 days. The stirring time depends on the used reactants and conditions, wherein the stirring will be stopped after a clear sol solution is achieved. As a rule, clear sols are only obtained if additives ($Li^{1+}$, $Mg^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3/5+}$ compounds) are added. Thus, in case of acetates as precursors, addition of $Zn^{2+}$, $Al^{3+}$, $Si^{4+}$, $Ti^{4+}$, $Zr^{4+}$, $Sn^{4+}$, $Sb^{3/5+}$ compounds results in clear sols after almost ca. 3 to 5 days, for the other additives it takes around 5 to 7 days. In case of magnesium lactate as precursor, the time until clear sols are formed takes in general 3 to 5 days longer.

Addition of $Zn^{2+}$, $Al^{3+}$, $Si^{4+}$, $Ti^{4+}$, $Zr^{4+}$, $Sn^{4+}$, $Sb^{3+}$ or $Sb^{5+}$ compounds results in clear sols after around 3 to 5 days, for the other additives it takes around 5 to 7 days. In case of magnesium lactate as precursor, the time until clear sols are formed takes in general 3 to 5 days longer. Additives causing the fastest clearing off time are in the order Al > Ti > Zr > Li > Sn > Zn.

Addition of these metal compounds influences the electrolyte concentration in the sol, and hence, very probably stabilizes the sol particle formation by establishing or enhancing, respectively, the electrical charge on the particle surface.

The inventors furthermore believe, without claiming to be correct, that the additive will positively influence the seed crystal and particle generation for building the above mentioned distinct species of single components, thus, leading to a clear sol solution in already 3 to 5 days in case of magnesium acetate but 5 to 7 days in case of lactate as precursor.

Another general tendency seems to be, the stronger acidic the additives are the faster the sols clear up, but parallel also the tendency to form gels increases.

In some embodiments, the HF of step b. will be applied in form of a solution in a water free solvent, which will be practical in order to use the amount of HF in an exact stoichiometric ratio. In some embodiments, the reaction solvent is an alcohol such as ethanol or methanol. The water content of the final sol solution will be governed by the water content of the solvent, the water content of the carboxylate, in particular magnesium acetate or magnesium lactate and the water content of the HF solution. In some embodiments, the non-aqueous solvent of the first and second volume is the same.

In some embodiments, the magnesium precursor is a magnesium halogenide or a magnesium alcoholate, in particular magnesium chloride or magnesium ethanolate.

In some embodiments, the magnesium precursor will be a magnesium carboxylate, for example magnesium acetate or magnesium lactate, a magnesium alcoholate, in particular a magnesium ethoxide, or a magnesium chloride or magnesium nitrate and the reaction solvent will be an alcohol such as ethanol or methanol. Therein, the water content of the final sol solution will be governed by the water content of the solvent, the water content of the magnesium precursor such as magnesium chloride, magnesium nitrate, magnesium ethoxide, magnesium acetate or lactate and the water content of the HF solution (if a solution is used, as will be practical in order to adjust the amount of HF to an exact stoichiometric equivalent).

In addition, for such embodiments where the solvent is an alcohol and the magnesium ligand is a carboxylate, water formed by esterification of the carboxylic acid formed in the reaction between magnesium carboxylate and HF, with the solvent needs to be accounted for. Such accounting needs to take place to the degree that water is actually formed, i.e. by determining the amount of esterification, which may be different for different solvent-acid combinations. Moreover, the esterification product may well have an influence on the stability of the resulting sol solution. It has been found, for example, that addition of acetic acid ethyl ester to a sol solution formed by reaction of calcium acetate in ethanol does not influence the stability of the sol. However, water as by-product of esterification can destabilize the sol. Water in general tends to perturb sol formation and favours gelling. When comparing the method of the present invention with sol formation protocols employing other carboxylic acids (particularly the known acetate routes, which, for example, use aqueous hydrofluoric acid), the use of acetate and lactate according to the method of the invention offers unexpected advantages with respect to ease of formation and stability of the resulting sol solutions.

Whenever magnesium carboxylates, in particular magnesium acetate or magnesium lactate, are employed in sol formation reactions using an essentially water free alcoholic solution of HF, water formed by esterification of the carboxylic acid, in particular the acetic acid or lactic acid, formed in the reaction between magnesium carboxylate, in particular magnesium acetate or magnesium lactate, and HF needs to be accounted for. Water in general tends to perturb sol formation and favours gelling. The amount of water formed by esterification is equal to the amount of ester produced, which may be different for different solvent-acid combinations. Moreover, the esterification product may well have an influence on the stability of the resulting sol solution.

When comparing the method of the present invention with sol formation protocols employing other carboxylic acids (particularly the known acetate routes discussed above, which, for example, use aqueous hydrofluoric acid), the use of acetate and lactate according to the method of the invention seems to offer unexpected advantages with respect to ease of formation and stability of the resulting sol solutions.

The use of dry magnesium carboxylic acids (contrary to the use of for example magnesium acetate tetrahydrate in the state of the art), in particular magnesium acetate and magnesium lactate, in a water free solution of HF reduces the water amount of the reaction and thus, the above mentioned negative effects of water are reduced significantly. The only essential source of water according to the method of the invention is the amount of water which is formed by the esterification. Thus, a small amount of water is present during the reaction und the unwanted negative effects of said water are reduced. It was found, that use of e.g. magnesium acetate tetrahydrate results very fast in the formation of clear precursor solutions and even slightly faster clearing off of the sols, but generally those sole undergo very fast transformation into gels due to the water brought into the reaction system. Thus, according to the present invention water above a critical overall concentration has to be prevented. Lactate seems to profit from another advantage: the esterification reaction is less favoured thermodynamically because lactate has a lower $pK_A$ value as for example acetate (hence less acid is present to be esterified), thus, only a very small amount of water due to the esterification is present in the reaction and the risk of gelling is reduced.

The method according to the invention does not rely on complete absence of water. The solvents, which are referred to as "water free" or "dry", used for preparing the first and second volume (in embodiments where HF is applied in solution) of the reaction do not have to be dried in a way that will result in a complete absence of water in the solvent. In practice, the use of "absolute" solvents, as supplied technically, having a water content of equal to or smaller than 0.2 % (w/w) has been sufficient. The same applies to the used reactants, particularly, the Magnesium lactate and magnesium acetate (or other magnesium compounds) were used in dried form, having a water content of 0.3 to 0.5 moles per mole magnesium. Starting from a water free $MgF_2$ sol (0.4molar) the gelling behaviour was tested by addition of increasing amount of water.

The water content of the sol solution is equal to or lower than 2.5 molar equivalents in relation to the molar magnesium content or the sum of magnesium and calcium of the solution.

In some embodiments, the water content of the sol solution is equal to or lower than 2.5, 2.4, 2.3, 2.2, 2.1, 2.0, 1.9, 1.8, 1.7, 1.6, 1.5, 1.4, 1.3, 1.2, 1.1, 1.0, 0.9, 0.8, 0.7, 0.6, 0.5, 0.4, 0.3, 0.2 or 0.1 mole water per mole magnesium carboxylate the optimal range laying between zero and 1.5%

One important parameter of the method according of the invention is the amount of HF being applied, the ideal amount being an essentially exact stoichiometric equivalent (2 HF per Mg). Significantly smaller amounts of HF will improve sol formation, however, will lead to impaired mechanical and optical properties of the resulting coating. An excess of HF lead to less stable sols or difficulties in sol formation. In general, amounts of HF exceeding 2 molar equivalents tend to favour crystalline rather than nanodisperse phases, leading to larger particle sizes and, eventually, precipitation.

Another ideal amount of HF, in case calcium is present in form of a calcium precursor (as an metal additive) and the used magnesium precursor and/or calcium additive and/or the further metal additive comprise chloride, is less than an exact stoichiometric equivalent per magnesium precursor (and per calcium precursor and/or metal additive), as discussed above, in particular an amount of 1,6 to 1,95 eq HF, further in particular an amount of 1,85 to 1,95 eq HF is used. In some embodiments, the exact stoichiometric amount is reduced by the amount of up to 1/3 of the molar equivalent of the overall chloride ($C_{Cl}$) amount in the sol reaction mixture ($1/3*n_{Cl}$ The smaller amount of HF will, in this case, improve sol formation and lead to enhanced mechanical properties without affecting the optical properties of the resulting coating. The inventors believe, without being bound by this theory that this is due to the formation of "$CaCl_xF_{2-x}$" particles (see discussion).

In some embodiments, the amount of HF employed ranges from 1.85 mole to 2.05 mole HF per mole magnesium carboxylate. In some embodiments, the amount of HF employed ranges from 1.9 mole to 2.05 mole HF per mole magnesium carboxylate. In some embodiments, the amount of HF employed ranges from 1.95 mole to 2.05 mole HF per mole magnesium carboxylate. In some embodiments, the amount of HF employed ranges from 1.98 mole to 2.02 mole HF per mole magnesium carboxylate. In some embodiments, the amount of HF employed ranges from 1.99 mole to 2.01 mole HF per mole magnesium carboxylate.

In some embodiments, the amount of HF employed ranges from 1,8 mole to 2,2 mole HF per mole Mg. In some embodiments, the amount of HF employed ranges from 1,9 mole to 2,1 mole HF per mole Mg. In some embodiments, the amount of HF employed ranges from 1,95 mole to 2,05 mole HF per mole Mg. In some embodiments, the amount of HF employed ranges from 1,98 mole to 2,02 mole HF per mole Mg. In some embodiments, the amount of HF employed ranges from 1,99 mole to 2,01 mole HF per mole Mg. In some embodiments, the amount of HF employed ranges from 1,8 mole to 1,95 mole HF, particularly 1,85 mole to 1,95 mole HF, per mole Mg. In some embodiments, the amount of HF employed ranges from 1,85 mole to 2,05 mole HF. The same ranges of the amount of HF employed (per mole calcium) apply for a calcium additive, if a calcium additive is used (see discussion below).

The precursor compound from which magnesium fluoride is formed can be selected from a broad range of magnesium salts; the main requirement being that a sol solution can be formed from the precursor in the solvent used within a reasonable amount of time. For embodiments, which aim at providing sol solutions for optical surface coatings, the acid (in the following abbreviated by the term: "BH") formed by the principal $MgF_2$ formation reaction

$$MgB_2 + HF \rightarrow MgF_2 + 2\ BH$$

must be removed from the coating in order not to degrade its optical properties. The removal of the acid is easily effected by evaporation during the drying or first thermal treatment of the coating. Hence, for embodiments of the invention where removal of the acid formed from the magnesium precursors is essential, the magnesium precursor is the magnesium salt of an acid that is volatile at the conditions employed during drying and tempering, for example a precursor that is the salt of an acid that is volatile (has a vapour pressure allowing the removal of essentially all (>99%) of the acid from a $0,5\mu$m optical coating at ambient pressure) at a temperature of 30°C, 40°C, 50°C, 60°C, 70°C, 80°C, 90°C, 100°C, 125°C, 150°C, 175°C, 200°C, 225°C, 250°C, 275°C or 300°C. In some embodiments a temperature in the range of about 100°C to 500°C, in particular of about 250°C to 500°C can be used. In some embodiments a temperature in the range of about 400°C to 500°C can be used. In some embodiments a temperature in the range of about 100°C to 700°C is used.

In some embodiments, the magnesium precursor is a magnesium alcoholate (RO-), a magnesium carboxylate (RCOO-), magnesium chloride or magnesium nitrate. In some embodiments, the magnesium precursor is magnesium methanolate, magnesium ethanolate or magnesium lactate. In some embodiments, the magnesium precursor is magnesium alcoholate, magnesium chloride or magnesium carboxylate, in particular magnesium acetate or lactate. In some embodiments, the magnesium precursor is magnesium alcoholate, in particular magnesium ethanolate, or magnesium chloride.

A large number of solvents offer themselves for practicing the invention. In some embodiments, the non-aqueous solvent is an alcohol such as, by way of non-limiting example, methanol, ethanol or isopropanol. In some embodiments, the non-aqueous solvent is ethanol or isopropanol, particularly ethanol. In some embodiments, the non-aqueous solvent is a polyalcohol such as, by way of non-limiting example, (poly)ethyleneglycol. In some embodiments, the non-aqueous solvent is an ether such as, by way of non-limiting example, dietyl ether, methyl tert-butyl ether or tetrahydrofurane. In some embodiments, the non-aqueous solvent is an ester. In some embodiments, the non-aqueous solvent is a mixture of any of the previously cited solvents.

For embodiments that aim at providing technical scale quantities, the solvent needs to be available at low price, restricting the most interesting options mainly to methanol, ethanol or isopropanol. Since methanol is toxic, handling and operation of the sol formation itself and its downstream applications in surface coatings require additional safety measures. For such applications, embodiments of the process of the invention are preferred in which ethanol or isopropanol can be used as a solvent. The method according to the present invention offers the great advantage of providing sol solutions that are particularly stable in ethanol even at high concentrations. In some embodiments - using ethanol or isopropanol as a solvent - the solution has a magnesium content in the range of about 0.2 mol/L to 0.8 mol/L, in particular of about 0.2 mol/L to 0.6 mol/L. In some embodiments using ethanol or isopropanol as a solvent the solution has a magnesium content in the range of about 0.2 mol/L to 0.4 mol/L.

In some embodiments, the magnesium precursor is magnesium chloride. In some embodiments, the magnesium precursor is magnesium ethanolate. In one embodiment, the non-aqueous solvent is ethanol and the precursor is magnesium ethanolate or magnesium chloride. In some embodiments, the magnesium precursor is magnesium lactate. In one embodiment, the non-aqueous solvent is ethanol. In one embodiment, the non-aqueous solvent is ethanol and the precursor is magnesium lactate.

In some embodiments, the magnesium precursor is an alcoholate (RO-), a carboxylate (RCOO-), an alkoxycarbonate, a nitrate or a halide (selected from chloride, bromide and iodide), in particular a halogenide, a alcoholate or a carboxylate, and further in particular a chloride or ethanolate. In some embodiments, the magnesium precursor is a magnesium alcoholate (RO-), a magnesium carboxylate (RCOO-), magnesium chloride or magnesium nitrate, particularly a magnesium alcoholate or magnesium chloride, further in particular magnesium ethanolate and magnesium chloride.

In some embodiments, the calcium additive, in form of a calcium precursor, is an alcoholate (RO-), a carboxylate (RCOO-), an alkoxycarbonate, a nitrate or a halide (selected from chloride, bromide and iodide), in particular a halogenide, a alcoholate or a carboxylate, and further in particular chloride or ethanolate. In some embodiments, the calcium additive is a calcium alcoholate (RO-), a calcium carboxylate (RCOO-), calcium chloride or calcium nitrate, particularly a calcium alcoholate or calcium chloride, further in particular calcium ethanolate and calcium chloride.

In some embodiments, the sol solution reaction comprises a magnesium precursor comprising an alcoholate (RO-), a carboxylate (RCOO-), an alkoxycarbonate, a nitrate or a halide (selected from chloride, bromide and iodide), in particular a halogenide, a alcoholate or a carboxylate, and further in particular chloride or ethanolate and a calcium additive comprising an alcoholate (RO-), a carboxylate (RCOO-), an alkoxycarbonate, nitrate or a halide (selected from chloride, bromide and iodide), in particular a halogenide, a alcoholate or a carboxylate, and further in particular chloride or ethanolate.

In some embodiments, the sol solution reaction comprises a magnesium precursor comprising an alcoholate (RO-) or a halide (selected from chloride, bromide and iodide), in particular a chloride or ethanolate and a calcium additive comprising an alcoholate (RO-) or a halide (selected from chloride, bromide and iodide), in particular a chloride or ethanolate, wherein further in particular at least one of the mentioned compounds comprises chloride.

The inventors have surprisingly found that addition of a metal additive compound (referred to as "metal additive" or "additive") to the sol reaction improves the optical and mechanical properties of the coating layers obtained from these sols. The resulting coatings show increased amorphicity and porosity. Furthermore, the addition of metal additive results in an improved and faster clearing off concerning the sol solution, and an improved stability of said sol solution. In some embodiments, the sol reaction is modified by including an additive precursor selected from the group comprising an alcoholate (RO-), a carboxylate (RCOO-), an alkoxycarbonate, a nitrate or a halogenide such as chloride, bromide or iodide of lithium, magnesium, calcium, strontium, aluminium, silicium, zirconium, titanium antimony, tin or zinc.

In some embodiments, the sol reaction is modified by including a calcium additive, wherein the calcium additive comprises an alcoholate (RO-), a carboxylate (RCOO-), an alkoxycarbonate, nitrate or a halide (selected from chloride, bromide and iodide), in particular halogenide, a alcoholate or a carboxylate, and further in particular chloride or ethanolate.

In some embodiments, the sol reaction is modified by including a metal additive compound selected from the group comprising an alcoholate (RO-), a carboxylate (RCOO-), an alkoxycarbonate, a nitrate or a halogenide of lithium, magnesium, calcium, strontium, aluminium, silicium, zirconium, titanium, antimony, tin or zinc.

In some embodiments, the sol reaction is modified by including a metal additive compound selected from the group comprising an alcoholate (RO-), a carboxylate (RCOO-), an alkoxycarbonate, a nitrate or a halogenide of lithium, magnesium, calcium, strontium, aluminium, silicium, zirconium, titanium, antimony, tin or zinc. In some embodiments, the sol reaction is modified by including a metal additive compound selected from the group comprising chloride, methanolate, ethanolate, acetate or lactate of lithium, magnesium, calcium, strontium, aluminium, silicium, zirconium, titanium, antimony, tin or zinc, in particular of magnesium, calcium, aluminium, silicium, zirconium or titanium, further in particular of magnesium, calcium or aluminium.

In some embodiments, the sol reaction is modified by including a magnesium additive and a metal additive independently selected from each other from the above mentioned groups.

In some embodiments, the sol reaction is modified by including a metal additive compound selected from the group comprising an alcoholate (RO-), a carboxylate (RCOO-), an alkoxycarbonate, nitrate or a halide (selected from chloride, bromide and iodide) of lithium, calcium, strontium, aluminium, silicium, zirconium, titanium, antimony, tin or zinc in particular of calcium, aluminium, silicium, zirconium or titanium, further in particular of calcium or aluminium.

In some embodiments, the sol reaction is modified by including a metal additive compound selected from the group comprising chloride, methanolate, ethanolate, propylate, butylate, acetate or lactate, in particular chloride or an alcoholate such as ethanolate of lithium, magnesium, calcium, strontium, aluminium, silicium, zirconium, titanium, antimony, tin or zinc, in particular of magnesium, calcium, aluminium, silicium, zirconium or titanium, further in particular magnesium, calcium or aluminium.

In some embodiments, the sol reaction is modified by including a metal additive compound selected from the group comprising a chloride of lithium, magnesium, calcium, strontium, aluminium, silicium, zirconium, titanium, antimony, tin or zinc, in particular a chloride of magnesium, calcium or aluminium, in particular of magnesium, calcium, aluminium, silicium, zirconium or titanium, further in particular of magnesium, calcium or aluminium. above mentioned metal additive compounds may be employed in a sol reaction comprising a magnesium precursor or a magnesium precursor and a calcium additive, selected from the embodiments as discussed above.

In some embodiments, the sol reaction comprises a magnesium precursor selected from magnesium acetate, lactate or ethanolate. In some embodiments, the sol reaction comprises a magnesium precursor selected from magnesium chloride. In some embodiments, the sol reaction comprises a magnesium precursor selected from magnesium alcoholate, in particular magnesium ethanolate, and an additive selected from magnesium or calcium chloride. In some embodiments, the sol reaction comprises a calcium precursor selected from calcium chloride and a magnesium alcoholate additive, in particular magnesium ethanolate. In some embodiments, the sol reaction comprises a calcium precursor selected from calcium ethanolate and a magnesium chloride additive.

In some embodiments two or more metal additives in form of an additive precursor are added before or after the fluorination with hydrogen fluoride of step b, in particular after the fluorination with hydrogen fluoride of step b, selected from the embodiments as discussed above, are added.

An important distinction of embodiments making use of additives is the fact that the metal additive compound may be added during the fluorination step, i.e. along with magnesium carboxylate.

In some embodiments, the metal additive precursor is present in an amount of 0.2 mole (1:5) to 0.001 mole (1:1000) per mole magnesium. In some embodiments, the metal additive precursor is present in an amount of 0.1 mole (1:10) to 0.01 mole (1:100) per mole magnesium. In some embodiments, the metal additive compound is present in an amount of 0.2 mole (1:5) to 0.01 mole (1:100) per mole magnesium. In some embodiments, the metal additive compound is present in an amount of 0.2 mole (1:5) to 0.04 mole (1:25) per mole magnesium. In some embodiments, the metal additive compound is present in an amount of 0.2 mole (1:5) to 0.08 mole (1:12.5) per mole magnesium. In some embodiments, the metal additive compound is present in an amount of 0.1 mole (1:10) to 0.04 mole (1:25) per mole magnesium. In some embodiments, the metal additive compound is present in an amount of 0.01 mole (1:100) to 0.04 mole (1:25) per mole magnesium.

In some embodiments, the calcium additive precursor is present in an amount of 0.99 mole (99:100) to 0.1 mole (1:10) per mole magnesium. In some embodiments, the calcium additive precursor is present in an amount of 0.99 mole (99:100) to 0.25 mole (1:4) per mole magnesium. In some embodiments, the calcium additive precursor is present in an amount of 0.35 mole (7:20) to 25 mole (1:4) per mole magnesium.

In some embodiments, a calcium additive compound is present in an amount of 1 mole (1:1) to 0.01 mole (1:100) per mole magnesium. In some embodiments, the calcium additive is present in an amount of 0.99 mole (99:100) to 0.01 mole (1:100) per mole magnesium. In some embodiments, the calcium additive is present in an amount of 1 mole (1:1) to 0.25 mole (1:4) per mole magnesium. In some embodiments, the calcium additive is present in an amount of 1 mole (1:1) to 0.4 mole (1:2.5) per mole magnesium. In some embodiments, the calcium additive is present in an amount of 0.67 mole (1:1.5) to 0.4 mole (1:2.5) per mole magnesium. In some embodiments, the calcium additive is present in an amount of 1 mole (1:1) to more than 0.25 mole per mole magnesium. In some embodiments, the calcium additive is present in an amount of 0.4 mole (1:2.5) to more than 0.25 mole per mole magnesium. In some embodiments, the calcium additive is present in an amount of 0.99 mole (1:99) to more than 0.25 mole per mole magnesium. However in case of a magnesium alkoxide precursor, the amount of calcium additive is more than 20 %, wherein the remaining higher (terminal) value still apply to this embodiments.

In some embodiments, additionally to the before mentioned calcium additive a further metal additive compound is present in an amount of 0.2 mole (1:5) to 0.01 mole (1:100) per mole calcium and magnesium (in other words the metal additive is calculated with respect to the sum of the molar equivalents of magnesium and calcium additive). In some embodiments, the metal additive compound is present in an amount of 0.2 mole (1:5) to 0.04 mole (1:25) per mole calcium and magnesium. In some embodiments, the metal additive compound is present in an amount of 0.2 mole (1:5) to 0.08 mole (1:12.5) per mole calcium and magnesium. In some embodiments, the metal additive compound is present in an amount of 0.1 mole (1:10) to 0.04 mole (1:25) per mole calcium and magnesium. In some embodiments, the metal additive compound is present in an amount of 0.01 mole (1:100) to 0.04 mole (1:25) per mole calcium and magnesium.

The metal additive compound can be selected from a broad range of metal compounds; the main requirement being that a sol solution can be formed from the metal additive compound in the solvent used within a reasonable amount of time. For embodiments, which aim at providing sol solutions for optical surface coatings, the acid (in the following abbreviated by the term: "BH") formed by the principal $MF_x$ formation reaction

$$MB_x + xHF \rightarrow MF_x + x\,BH$$

must be removed from the coating in order not to degrade its optical properties. The removal of the acid is easily effected by evaporation during the drying or first thermal treatment of the coating. Hence, for embodiments of the invention where removal of the acid formed from the metal additive compound is essential, the metal additive compound is the salt of an acid that is volatile at the conditions employed during drying and tempering, for example a metal additive compound that is the salt of an acid that is volatile (has a vapour pressure allowing the removal of essentially all (>99%) of the acid from an up to 0,5 $\mu$m optical coating at ambient pressure) at a temperature of 30°C, 40°C, 50°C, 60°C, 70°C, 80°C, 90°C, 100°C, 125°C, 150°C, 175°C, 200°C, 225°C, 250°C, 275°C, 300°C, 325°C, 350°C, 375°C, 400°C, 425°C, 450°C, 475°C, 500°C. In some embodiments a temperature in the range of about 100°C to 500°C, in particular of about 250°C to 500°C can be used. In some embodiments a temperature in the range of about 400°C to 500°C can be used.

The resulting additive fluoride particles are, to the extent that the inventors have been able to characterize these phases, not double salts of magnesium and additive, but rather distinct species, present in the sol as a mixture of single components ($MgF_2$ and the $MF_x$additive). In some embodiments, the additive fluoride particles have a diameter size of smaller than (<) 100 nm, < 75 nm, < 50 nm, < 40 nm, < 30 nm, < 20 nm or < 10 nm. Concerning other species reference is made to the discussion further below.

In some embodiments, an amount of 1%, 2%, 3%, 4%, 5%, 6%, 7%, 8% or 10% (mol equ.) of tetraethoxysilane (TEOS) is added to the calcium precursor solution or suspension, leading to more rapid sol formation than without the additive.

Addition of said additives promotes the formation of mostly amorphous nano-$MgF_2$ particles that are even smaller than those obtained without additives; thus resulting in an improved architectural ordering of the layer, and hence improved mechanical strength. Based on $^{19}$F-NMR spectra, characteristic patterns for the $MgF_2$ particles synthesized this way can be obtained thus allowing distinction from $MgF_2$-materials obtained according different syntheses approaches.

If $M^{n+}$-additives are used the HF-stoichiometry related to magnesium carboxylate, in particular magnesium acetate or magnesium lactate, $(n_{HF}/n_{Mg2+})$ can be varied between 1.9 up to 2.05. In some embodiments, the stoichiometric ratio of HF to magnesium precursor $(n_{HF}/n_{Mg2+})$ can be varied between 1.85 up to 2.05, in particular between 1.9 up to 2.05. In some embodiments, the HF stoichiometry will be fixed to exactly 2.0 in reference to the magnesium content. As long as stoichiometric amounts of HF (2 mol of HF for each mol magnesium precursor (e.g. magnesium carboxylate)) are used formation of the other $MF_n$ ($M^{n+} = Li^{1+}$, $Sn^{2+}$, $Zn^{2+}$, $Al^{3+}$, $Si^{4+}$, $Ti^{4+}$, $Zr^{4+}$, $Sn^{4+}$, $Sb^{3+}$) is suppressed as evidenced by NMR, thus, only the magnesium carboxylate will be fluorinated. In some embodiments, the HF stoichiometry will be fixed to exactly 2.0 in reference to the content of calcium and additive, wherein the amount of fluoride that can react with the additive is computed according to the oxidation state of the additive. Thus, for embodiments where magnesium precursors and additives according to the above definition are present and an exact stoichiometric amount of 2 HF per magnesium is used, only the magnesium precursor will be fluorinated. It is possible that in some embodiments, traces of the magnesium precursor will not be fluorinated and traces of the additive can be partially or totally fluorinated, which may be due to an equilibrium in the sol reaction. However, these traces will be in the range off around 1 to 2 mol% related to $MgF_2$. In some embodiments 2 eq HF are used and additionally a metal additive is added to the sol reaction without a further addition of HF. This allows a reaction of the metal additive with the remaining not reacted HF, as discussed above, yielding some partially fluorinated metal additives while removing the unreacted HF from the reaction mixture. It has to be noted, that some of the used metal additives (such as Si, Zr, Ti, Al or Sn additives) will not yield completely fluorinated compounds - regardless of the applied (stoichiometric) amount of HF.

In some embodiments, the HF stoichiometry will be fixed to exactly 2.0 in reference to the content of magnesium and additive, wherein the amount of fluoride that can react with the additive is computed according to the oxidation state of the additive. For example, if 20 mol% $ZnCl_2$ (as a metal additive) and 1 mol magnesium carboxylate are used the amount of HF will be 2.4 mol. The addition of the metal additive compound before adding the HF solution allows a complete fluorination of the magnesium carboxylate and the metal additive compound. Concerning trace amounts of unfluorinated compounds reference is made to the discussion above.

If a magnesium precursor and a calcium additive are used, the stoichiometric ratio of HF to magnesium precursor $(n_{HF}/n_{Mg2+})$ can be varied between 1.85 up to 2.05, in particular between 1.9 up to 2.05, and additionally the stoichiometric ratio of HF to calcium additive $(n_{HF}/n_{Ca2+})$ can be varied between 1.85 up to 2.05, in particular between 1.9 up to 2.05. In some embodiments, the stoichiometric ratio of HF to the magnesium precursor and the calcium additive will be fixed to exactly 2.0 for each. According to the inventor's observations, as long as stoichiometric amounts of HF (2 mol of HF for each mol magnesium precursor and 2 mol HF for each mol calcium additive) are used, formation of fluorides of eventual additive $MF_x$ ($M = Li^{1+}$, $Sn^{2+}$, $Zn^{2+}$, $Al^{3+}$, $Si^{4+}$, $Ti^{4+}$, $Zr^{4+}$, $Sn^{4+}$, $Sb^{3+}$ or $Sb^{5+}$, x is equal to the oxidation state of the metal M) is suppressed as evidenced by NMR. Thus, for embodiments where magnesium precursors, calcium additive and further metal additives according to the above definition are present and an exact stoichiometric amount of 2 HF per calcium and 2 HF per magnesium are used, only the magnesium precursor and the calcium additive will be fluorinated. The term "only the magnesium precursor and the calcium additive will be fluorinated" refers to an essentially quantitative conversion of the magnesium precursor and the calcium additive. It is possible that in some embodiments, traces of the magnesium precursor will not be fluorinated and traces of the additive can be partially or totally fluorinated. However, these traces will be in the range of around 1 to 2 mol% related to $CaF_2$ and $MgF_2$. In some embodiments 2 eq HF are used and additionally a further metal additive is added to the sol reaction without a further addition of HF. This allows a reaction of the metal additive with the remaining not reacted HF, yielding some partially fluorinated metal additives as discussed above.

However, in case $Ca^{2+}$ and $Sr^{2+}$ additives are present a formation of fluorides of these additives and the magnesium precursor will take place. Thus, the amount of HF, depending on the desired outcome, has to be calculated accordingly (e.g. if calcium, strontium and magnesium are present and a complete fluorination of magnesium is desired the amount of HF (2 eq) hast to be calculated according to the sum of calcium, strontium and magnesium of present in the sol reaction solvent.

In some embodiments, the stoichiometric ratio of HF to magnesium precursor $(n_{HF}/n_{Mg2+})$ can be varied between 1.85 up to 1.95, in particular if chloride ions and calcium additives are present in the sol reaction solvent. The presence of chloride ions yields a "CaClF species" ($CaCl_xF_{2-x}$ see discussion), which has very good sintering abilities (as will be discussed below). If strontium is present in the reaction similar partially fluorinated species may be produced. Reference is also made to the discussion above concerning the "CaClF" species.

In some embodiments, the sol reaction is modified by including a metal additive compound selected from the group comprising an alcoholate (RO-), a carboxylate (RCOO-), an alkoxycarbonate, a nitrate or a halogenide of lithium, magnesium, calcium, strontium, aluminium, silicium, zirconium, titanium, antimony, tin or zinc.

A further important distinction of embodiments making use of additives is the fact that the metal additive compound may be added after the fluorination step of the magnesium carboxylate.

If $M^{n+}$-additives are used in the above mentioned embodiments (addition after the fluorination step) the HF-stoichiometry related to magnesium carboxylate, in particular magnesium acetate or magnesium lactate, $(n_{HF}/n_{Mg2+})$ can be varied between 1.9 up to 2.05. In some embodiments, the HF stoichiometry will be fixed to exactly 2.0 in reference to the magnesium content. As long as stoichiometric amounts of HF (2 mol of HF for each mol magnesium carboxylate) are used formation of the other $MF_n$ ($M^{n+}$ = $Li^{1+}$, $Mg^{2+}$, $Ca^{2+}$, $Sr^{2+}$, $Sn^{2+/4+}$, $Zn^{2+}$, $Al^{3+}$, $Si^{4+}$, $Ti^{4+}$, $Zr^{4+}$, $Sb^{3+}$) is suppressed as evidenced by NMR, thus, only the Mg carboxylate will be fluorinated. Concerning traces of unfluorinated magnesium carboxylate and/or traces of fluorinated metal additive references is made to the discussion above. In some embodiments, the HF stoichiometry will be fixed to exactly 2.0 in reference to the content of magnesium and additive, wherein the amount of fluoride that can react with the additive is computed according to the oxidation state of the additive, thus, the magnesium of the magnesium carboxylate and the metal of the additive will be completely fluorinated. The addition of the metal additive compound after the fluorination by the HF solution allows a complete fluorination of the magnesium carboxylate without a fluorination of the metal additive compound. Concerning trace amounts of unfluorinated magnesium carboxylate or partially fluorinated metal additive compounds reference is made to the discussions above.

In some embodiments, a magnesium precursor and a metal additive are used and essentially all of the magnesium and essentially the entire additive is fluorinated. Thus, in such embodiments, the HF stoichiometry is fixed to exactly 2.0 in reference to the content of magnesium plus an additional amount for the metal additive, wherein the additional amount of fluoride that can react with the additive is computed according to the oxidation state of the additive and the amount of the additive employed in the reaction. For example, if 200 mmol $ZnCl_2$ (as a metal additive) and 1 mol magnesium precursor are used, the amount of HF will be 2.4 mole. The addition of the metal additive compound before adding the HF solution allows a complete fluorination of the magnesium precursor and the metal additive compound. In some embodiments, trace amounts of non-fluorinated compounds (1-2% of the magnesium employed in the reaction) may persist in the sol thus formed, as discussed above. An analogue description applies if two or more different metal additives are used. In some embodiments, even with such a fixed HF stoichiometry only partially fluorinated additive compounds are observed.

In some embodiments, a magnesium precursor and metal additives are used and essentially all of the magnesium and some of the additive is fluorinated. Thus, in such embodiments, the HF stoichiometry is fixed to 2.0 in reference to the content of magnesium derived from the magnesium precursor employed in the reaction, plus an additional amount of HF, which is computed multiplying the oxidation state of the additive, the amount of the additive and the molar percentage of additive fluorination. Thus, according to the above example of 1 mol magnesium precursor and 200 mmol zinc, the stoichiometry of HF can be selected in the range from 2.0 mol HF (essentially no fluorination of the additive takes place) to 2.4 mol HF (essentially all of the additive is fluorinated). If the aim of the reaction is only a partial fluorination of the additive (e.g. of about 50 % with reference to the above mentioned example), 2.2 mol HF will be applied. Depending on the amount of additive present in the reaction, the amount of HF for a potentially complete fluorination will be computed accordingly. For example, if 100 mmol $ZnCl_2$ and 1 mol of magnesium precursor will be used, the amount of HF can be selected in the range from 2.0 to 2.2 mole HF. The same applies for the oxidation state. A lower oxidation state amounts to a lesser amount of HF necessary for a complete fluorination, wherein a higher oxidation state amounts to a higher amount of HF. For example, if a $Li^+$-additive (200 mmol) is used (instead of the above mentioned $ZnCl_2$), the range of HF will be between 2.0 and 2.2 mol HF, however, if a $Ti^{4+}$-additive (200 mmol) is used, the range of HF will be between 2.0 and 2.8 mol HF. An analogue description applies for two or more additives.

In some embodiments, a magnesium precursor, a calcium additive and at least one further metal additive are used and essentially the entire magnesium precursor, essentially the entire calcium additive and essentially the entire additive is fluorinated. Thus, in such embodiments, the HF stoichiometry is fixed to exactly 2.0 in reference to the content of magnesium precursor and calcium additive plus an additional amount for the metal additive, wherein the additional amount of fluoride that can react with the additive is computed according to the oxidation state of the additive and the amount of the additive employed in the reaction. Reference is made to the previous description concerning a complete fluorination and examples of the calculation. An analogue description applies if two or more different metal additives are used.

In some embodiments, a magnesium precursor, a calcium additive and at least one further metal additive are used and essentially the entire magnesium precursor, essentially the entire calcium additive and some or none of the further metal additive is fluorinated. Thus, in such embodiments, the HF stoichiometry is fixed to 2.0 in reference to the content of magnesium derived from the magnesium precursor and the content of calcium derived from the calcium additive employed in the reaction, plus an additional amount of HF, which is computed multiplying the oxidation state of the additive, the amount of the additive and the molar percentage of additive fluorination. Reference is made to the previous description concerning a partial fluorination and examples of the calculation. An analogue description applies if two or more different metal additives are used.

Thus, the HF stoichiometry can be fixed to 2.0 in reference to the content of magnesium derived from the magnesium precursor ($n_{Mg}$) used in the reaction according to the following formula

$$n_{HF} = 2 * n_{Mg},$$

or

in reference to the content of magnesium derived from the magnesium precursor ($n_{Mg}$) and the content of calcium derived from the calcium additive ($n_{Ca}$) used in the reaction according to the following formula

$$n_{HF} = 2 * (n_{Ca} + n_{Mg}),$$

wherein $n_{HF}$ is the amount of HF in mole, $n_{Ca}$ is the amount of the calcium additive, $n_{Mg}$ is the amount of magnesium precursor.

In some embodiments, in particular if chloride is present, even if stoichiometric amounts of HF (in case of $n_{Mg}$ or ($n_{ca} + n_{Mg}$)) are used, not all of the used HF will react with the magnesium precursor or the magnesium precursor and the calcium additive. In such a case a further metal additive may be used, which will react with the unreacted HF, yielding some partially fluorinated additive compounds while removing the remaining HF from the sol reaction.

The inventors believe, without being bound by this theory, that unreacted HF may cause an inferior wettability of the sol, which generally occurs after a few days, with regard to other sols according to the invention comprising no or less unreacted HF.

Furthermore, the HF stoichiometry can be fixed to 2.0 in reference to the content of magnesium derived from the magnesium precursor ($n_{Mg}$) used in the reaction, plus an additional amount of HF ($n_{adHF}$) according to the following formula:

$$n_{HF} = 2 * n_{Mg} + n_{adHF},$$

or

in reference to the content of magnesium derived from the magnesium precursor ($n_{Mg}$) and the content of calcium derived from the calcium additive ($n_{Ca}$) used in the reaction, plus an additional amount of HF ($n_{adHF}$) according to the following formula:

$$n_{HF} = 2 * (n_{Ca} + n_{Mg}) + n_{adHF}$$

wherein $n_{HF}$ is the amount of HF in mole, $n_{Ca}$ is the amount of the calcium additive, $n_{Mg}$ is the amount of magnesium precursor and $n_{adHF}$ is the amount of HF for fluorination of additives.

The HF stoichiometry for the additive can be computed according to the oxidation state (Ox) of the additive and the amount of the additive and the selected degree of fluorination of said additive (A). The additional amount of HF ($n_{adHF}$) can be computed according to the following formula:

$$n_{adHF} = (n_{Mg} * \chi_{additve}) * Ox * A,$$

in case of a magnesium precursor, or

$$n_{adHF} = [(n_{Ca} + n_{Mg}) * \chi_{additve}] * Ox * A,$$

in case of a magnesium precursor and a calcium additive,

wherein $n_{Mg}$ is the amount of magnesium precursor, $n_{Ca}$ is the amount of calcium additive, $\chi_{additve}$ is the molar percentage of said metal additive precursor in relation to said molar amount of said magnesium precursor or the sum of said molar amount of said magnesium precursor and said calcium additive, Ox is the oxidation state of the metal of the additive and A is selected from $0 \leq A \leq 1$.

In some embodiments, A is 0, yielding essentially unfluorinated metal additive compounds and no additional HF is applied. In some embodiments, in cases of an incomplete reaction of the stoichiometric amount of HF and the magnesium precursor or the magnesium precursor and the calcium additive, A is 0 and no additional HF is applied, yielding unfluorinated and partially fluorinated metal additive compounds, thus, removing or "neutralizing" the unreacted amount of HF. In some embodiments, A is 1, yielding essentially completely fluorinated metal additive compounds. In some embodiments, A is 0 < A < 1, yielding partially fluorinated metal additive compounds.

In some embodiments, a magnesium precursor or a magnesium precursor and a calcium additive or a magnesium precursor and at least one metal additive or a magnesium precursor, a calcium additive and at least one metal additive are used. The HF stoichiometry can be fixed to less than 2.0, particularly to 1.85 to 1.95, further in particular to 1.9 to 1.95, in reference to the content of magnesium derived from the magnesium precursor ($n_{Mg}$) or in reference to the content of magnesium derived from the magnesium precursor ($n_{Mg}$) and the content of calcium derived from the calcium additive ($n_{Ca}$) used in the reaction. In some embodiments, if calcium is present, the HF stoichiometry can be fixed to less than 2.0, particularly to 1.85 to 1.95, further in particular to 1.9 to 1.95, in reference to the content of chloride derived from the magnesium precursor ($n_{Mg}$) or in reference to the content of chloride derived from the magnesium precursor ($n_{Mg}$) and the content of chloride derived from the calcium additive ($n_{ca}$) or in reference to the content of chloride derived from the magnesium precursor ($n_{Mg}$) and/or the content of chloride derived from the calcium additive ($n_{Ca}$) and/or the content of chloride derived from the metal additive used in the reaction. An analogue formula concerning $n_{HF}$ applies. Such a HF stoichiometry is particularly applied if the magnesium precursor and/or the calcium additive and/or the metal additive comprise chloride. This allows a partially fluorinated $CaCl_xF_{2-x}$ species (also named "CaClF" species) with y being between 0.1 and 0.4 to be formed. The presence of $CaCl_xF_{2-x}$ in a magnesium sol yields, due to very good sintering abilities - after using the sol for a surface coating - to very enhanced mechanical properties without effecting the optical properties of the surface coating.

Depending on the metal of the additive used, the oxidation state of said metal, the amount of HF applied and the reaction conditions, the additive can be completely fluorinated, leading to $MF_x$ additives. Alternatively, parts of the additive can be completely fluorinated leading to $MF_x/MB_x$ mixtures of the additive as well as partially fluorinated additives $MF_mB_{x-m}$ or mixtures thereof (e.g. $MF_mB_{x-m}/MB_x$ or $MF_x/MF_mB_{x-m}/MB_x$), wherein x is equal to the oxidation state of the metal and m is equal to or smaller than the oxidation state and B is selected from the group comprising an alcoholate (RO-), a carboxylate (RCOO-), an alkoxycarbonate, nitrate or a halide anion (selected from chloride, bromide and iodide), particularly an alcoholate or chlordide. The partially fluorinated additives $MF_mB_{x-m}$ can comprise of identical fluorinated additives (e.g. only one residue is exchange by fluoride in the metal additive) as well as partially fluorinated additives in different states of fluorination (e.g. in some additive particles one residue is exchange by fluoride in the metal additive and in other additive particles two residues are exchanged or other possible combinations). Similar arguments apply if a magnesium additive, as discussed above, is used and the amount of HF is stoichiometric (2 eq HF) or less (e.g. 1.85 to 1.95 eq HF).

In some embodiments, the metal additive compound is selected from the group of $CaCl_2$ $MgCl_2$, $Ca(OEt)_2$, $Ca(Lac)_2$, $Ca(NO_3)$, $Mg(OEt)_2$, LiCl, $C_8H_{20}O_4Si$, $Zr(O^nPr)_4$, $Ti(O^iPr)_4$, $Al(O^iPr)_3$, $Sb(OAc)_3$, $AlCl_3$, $Sb(OAc)_3$ or $Sn(OAc)_2$ In some embodiments, additives comprising salts of inorganic acids are added to the reaction before the fluorination step. The inorganic acids produced during the fluorination step result in a faster clearing of the sol solution.

In some embodiments of the method of the invention, gaseous carbon dioxide is carried through the first volume prior to adding the second volume comprising anhydrous hydrogen fluoride. In one embodiment, the amount of carbon dioxide is adjusted in order for the first volume to reach a $CO_2$ content of between 1% and 5% (w/w). In one embodiment, the amount of carbon dioxide is adjusted in order for the first volume to reach a $CO_2$ content of 3% (w/w). Alternatively/additionally a catalytic amount of strong volatile acids may be applied.

A further distinction of embodiments making use of additives is the fact that the metal additive compound may be added after the fluorination step of the calcium precursor or the calcium precursor and the magnesium additive. In some embodiments, gaseous carbon dioxide is carried through the first volume prior to adding the second volume comprising anhydrous hydrogen fluoride. In one embodiment, the amount of carbon dioxide is adjusted in order for the first volume to reach a $CO_2$ content of between 1% and 5% (w/w), in particular to reach a $CO_2$ content of 3% (w/w).

In some embodiments, trifluoroacetic Acid (TFA) is added to the first volume or the second volume. The use of small amounts of TFA leads to shorter stirring times. By using TFA, the sol solutions clear faster. The inventor believes, without wishing to be bound by theory, that agglomeration products comprising a small amount of HF inside the agglomeration products are generated intermediately. Thus, some parts of the calcium precursor have not yet reacted with HF in a first phase of the reaction. A complete reaction with HF occurs when the HF diffuses into the agglomeration products and reacts with the remaining magnesium precursor, which leads to a clear sol solution. By adding small amounts of TFA, the TFA can react with the remaining magnesium precursor yielding a clear sol solution. The TFA-calcium-intermediate can be transformed by heating (as will be described later) to $MgF_2$. If metal additives (in comparison to the reaction of only magnesium precursors) are additionally used, even less TFA is necessary in order to obtain a clear sol solution in a reasonable amount of time. This leads to a lesser amount of esterification and thus, to a lower water content in the solution, which prevents gelling.

Addition of said additives promotes the formation of mostly amorphous nano-$CaF_2$ particles that are even smaller than those obtained without additives, thus, resulting in an improved architectural ordering of the layer, and hence improved mechanical strength.

In some embodiments, the sol reaction is modified by including a metal additive compound selected from the group comprising an alcoholate (RO-), a carboxylate (RCOO-), an alkoxycarbonate, a nitrate or a halogenide of lithium, magnesium, calcium, strontium, aluminium, silicium, zirconium, titanium, antimony, tin or zinc.

In some embodiments, the metal additive compound is chloride, nitrate, methanolate, ethanolate, acetate or lactate.

In some embodiments, an amount of 1%, 2%, 3%, 4%, 5%, 6%, 7%, 8% or 10% (mol equ.) of an $Si^{4+}$-compound, particularly Tetraethoxysilane (TEOS), in particular an amount in the range of 5 to 20mol% of tetraethoxysilane (TEOS), is added to the magnesium carboxylate, in particular magnesium acetate or magnesium lactate, solution or suspension, leading to more rapid sol formation than without the additive.

The said metal additives can be grouped into 2 classes.

Class 1 including Si, Ti, Zr, Mg, Ca, gives clearing off times for the sols inside of 3 to 5 days and also result in mechanically more stable layers, meaning especially improved scratch resistance. The preferred amounts range from 5 to 15% mol%

Class 2 including Sb, Sn, Sr, Zn, Li gives clearing off times for the sols inside of 5 to 8 days resulting in AR-layers with good optical properties but somehow less ser mechanic stability than class 1 additives. The preferred amount of additives range from 3 to 10 mol%.

According to a third aspect of the invention, a magnesium fluoride sol solution obtainable or obtained by a method according to the first aspect of the invention is provided. As an alternative of this second aspect of the invention, a magnesium fluoride sol solution comprising $MgF_2$ particles in a non-aqueous solvent is provided. The magnesium fluoride sol solution of the invention is characterized by a particle diameter size of smaller than (<) 50 nm, < 40 nm, < 30 nm, < 20 nm or < 10 nm. In some embodiments, the magnesium fluoride sol solution is constituted by nanoscopic scale $MgF_2$ particles with particle sizes ranging from 3 to 30 nm. In some embodiments, the particle size ranges from 8 to 35 nm. In some embodiments, the particle size ranges from 3 to 20 nm.

Addition of said additives promotes the formation of mostly amorphous nano-$MgF_2$ particles that are even smaller than those obtained without additives; thus resulting in an improved architectural ordering of the layer, and hence improved mechanical strength. Based on $^{19}$F-NMR spectra (cf. Fig 2), characteristic patterns for the $MgF_2$ particles synthesized this way can be obtained thus allowing distinction from $MgF_2$-materials obtained by different synthetic approaches.

Clear sols with small (between 3 and 20 nm) $MgF_2$-particles are obtained routinely when the magnesium carboxylates are fully soluble in the non-aqueous solvent, that is when clear solutions are obtained. Starting from dispersed systems often does not result in the formation of clear sols. Opaque or non-transparent sols do not give high performance AR-layers. Dispersed magnesium carboxylate systems, however, have been found to clear quickly and render truly nanodisperse sol solutions when metal additives, as indicated in the previous paragraphs, are employed. Alternatively the clearing of the sol may be supported by the use of $CO_2$, TFA and/or TEOS as discussed above.

The resulting additive fluoride particles are, to the extent that the inventors have been able to characterize these phases, not double salts of magnesium and additive, but rather distinct species, present in the sol as a mixture of single components ($MgF_2$ and the $MF_x$ additive or $MgF_2$ and the $MB_x$ additive, respectively). In some embodiments, the additive fluoride particles have a diameter size of smaller than (<)< 50 nm, < 40 nm, < 30 nm, < 20 nm, < 10 nm, < 5nm, < 4 nm or < 3 nm. In some embodiments, the magnesium fluoride particles have a particle diameter size of smaller than (<) 20 nm, 15 nm, < 10 nm, < 7 nm, < 5 nm, < 4 nm, or < 3 nm.

Depending on the reaction conditions resulting additive fluoride particles may be double salts of magnesium and additive present in the sol as a mixture of double salt components ($MgF_2/MF_x$ additive or $MgF_2/MB_x$ or $MF_mB_{x-m}$ additives, respectively, as discussed above). In some embodiments, the double salt component particles have a diameter size of smaller than (<) 50 nm, < 40 nm, < 30 nm, < 20 nm, < 10 nm, < 5nm, < 4 nm or < 3 nm. In some embodiments, the double salt component particles have a particle diameter size of smaller than (<) 20 nm, 15 nm, < 10 nm, < 7 nm, < 5 nm, < 4 nm, or < 3 nm. The same applies, if more than two metal components are used, yielding multiple salt components.

In some embodiments, the sol reaction results in a mixture of the single component particles and the double (multiple) salt particles with the parameters as discussed above.

The magnesium fluoride sol solution of the invention is characterized by a solution comprising an amount of $MgF_2$ particles and, additionally, an amount of additive particles, derived from a calcium additive and/or a metal additive (as described above), characterized by a general formula $MF_mB_{x-m}$, wherein $M^{n+}$ is selected from the group of $Li^+$, $Mg^{2+}$, $Ca^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3+}$ or $Sb^{5+}$, B is an anionic ligand to M, x is equal to the oxidation state of the metal M and m is equal to or smaller than the oxidation state of the metal M. In some embodiments, B is selected from the group comprising an alcoholate (RO-), a carboxylate (RCOO-), an alkoxycarbonate, nitrate or a halide anion (selected from chloride, bromide and iodide). In some embodiments, B is selected from chloride, methanolate, ethanolate, propoxylate, buthylate, acetate or lactate.

In some embodiments, the sol solution comprises essentially only fully fluorinated additive particles, wherein essentially all ligand B has been exchanged for fluoride, in other words, the additive component of the sol solution is characterized by a formula $MF_x$, with x equal to the oxidation state of the metal M.

In some embodiments, the sol solution comprises essentially only partially fluorinated additive particles, wherein some but not all ligand B has been exchanged for fluoride, in other words, the additive component of the sol solution is characterized by a formula $MF_mB_{x-m}$, with m being in the range of $0 < m < x$. In some such embodiments, m is 0,1 x, 0,2 x, 0,3 x, 0,4 x, 0,5 x, 0,6 x, 0,7 x, 0,8 x, or 0,9 x (e. g. $CaCl_xF_{2-x}$, $Zr(OnR)_{4-x}F_x$, $Ti(O^iR)_{4-x}F_x$, $Al(OiPr)_{3-x}$ or $F_x$, $SbCl_{3-x}F_x$). In some embodiments, m is in the range of $0 < m < x$, wherein x is the oxidation state of the metal M and m and x are natural numbers. Examples of such partially fluorinated additive particles are - without being limited to - $SiF(OR)_3$, $SiF_2(OR)_2$, $SiF_3(OR)$.

In some embodiments, the sol solution comprises essentially only partially fluorinated additive particles selected from selected from $CaCl_xF_{2-x}$, $Zr(O^nR)_{4-x}F_x$, $Ti(O^iR)_{4-x}F_x$, $Al(O^iPr)_3._xF_x$ or $SbCl_{3-x}F_x$, with x being selected from 0.5 to 1.5.

In some embodiments, the sol solution may comprise also some unfluorinated magnesium particles, as discussed above. An example of such an unfluorinated particle is - without being limited to - $Mg(OEt)_2$, which is due to an incomplete reaction of HF with the $Mg(OEt)_2$ precursor (optionally a "neutralisation" of the remaining HF by adding a metal additive, as described above may be applied). The amount of such unfluorinated magnesium precursors is around 1 to 2 % in relation to the amount of used magnesium precursor. Additionally the amount of unfluorinated magnesium precursors may be elevated by using less than a stoichiometric amount of HF.

In some embodiments, if chloride and calcium are present in the sol reaction, the sol solution may comprise also some partially fluorinated calcium particles, wherein some but not all of the calcium additive ligand has been exchanged for fluoride, in other words, the calcium component of the sol solution is characterized by a species $CaCl_xF_{2-x}$, with y being in the range of 0.1 to 0.4. Examples of such partially fluorinated additive particles are - without being limited to - $CaCl_{0.1}F_{1.9}$ or $CaCl_{0.4}F_{1.6}$ (see also sections concerning the $CaCl_xF_{2-x}$ species). The chloride may derive for example, from using a calcium chloride additive or a calcium ethanolate additive and a magnesium chloride precursor.

In some embodiments, the sol solution comprises essentially only non-fluorinated additive particles, wherein essentially none of ligand B has been exchanged for fluoride, in other words, the additive component of the sol solution is characterized by a formula $MB_x$.

In some embodiments, the sol solution comprises fully fluorinated additive particles, partially fluorinated additive particles and non-fluorinated particles in a combination. Additionally partially fluorinated magnesium precursor particles and non-fluorinated magnesium precursor particles may be present.

In some embodiments, the sol solution comprises $MgF_2$ particles and $MB_x$ metal additive particles, wherein M is selected from the group of $Li^+$, $Ca^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3+}$ or $Sb^{5+}$, and B is an anionic ligand, and x is equal to the oxidation state of the metal M. B can be selected from the group comprising an alcoholate (RO-), a carboxylate (RCOO-), an alkoxycarbonate, nitrate or a halide anion (selected from chloride, bromide and iodide), in particular chloride, methanolate, ethanolate, propoxylate, buthylate, acetate or lactate.

In some embodiments, the sol solution comprises $MgF_2$ particles and an amount of additive particles selected from the group comprising LiF, $CaF_2$, $SrF_2$, $BaF_2$, $SnF_2$, $AlF_3$, $SbF_3$, $SbF_5$, $ZrF_4$, and / or $ZnF_2$.

In some embodiments, the magnesium fluoride sol solution of the invention comprises an amount of additive particles of the formula $MF_mB_{x-m}$, wherein $M^{n+}$ is selected from the group comprising $Li^+$, $Mg^{2+}$, $Ca^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3+}$ or $Sb^{5+}$, wherein x is equal to the oxidation state of M, m is equal to or smaller than x, B is selected from the group comprising an alcoholate (RO-), a carboxylate (RCOO-), an alkoxycarbonate, nitrate or a halide anion (selected from chloride, bromide and iodide). In some embodiments, B is a chloride, methanolate, ethanolate, propoxylate, buthylate, acetate or lactate.

The magnesium fluoride sol solution of the invention is characterized by solution comprising $MgF_2$ particles and $M^{n+}B_x$ metal additive particles, wherein $M^{n+}$ additives selected from the group of $Li^{1+}$, $Mg^{2+}$, $Ca^{2+}$, $Sr^{2+}$, $Sn^{2+/4+}$, $Zn^{2+}$, $Al^{3+}$, $Si^{4+}$, $Ti^{4+}$, $Zr^{4+}$, $Sb^{3+}$ and B can be an inorganic or organic compound, wherein x is any integer of 1, 2, 3, 4, 5 or 6, preferably 1, 2, 3 or 4. B can be selected from the group comprising an alcoholate (RO-), a carboxylate (RCOO-), an alkoxycarbonate, a nitrate or a halogenide.

The magnesium fluoride sol solution of the invention is characterized by a solution comprising an amount of $MgF_2$ particles, an amount of $CaF_2$ particles or $CaF_mB_{x-m}$ particles, derived form the calcium additive, and, may comprise additionally, an amount of further additive particles characterized by a general formula $MF_mB_{x-m}$, wherein $M^{n+}$ is selected from the group of $Li^+$, $Ca^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3+}$ or $Sb^{5+}$, B is an anionic ligand to M, x is equal to the oxidation state of the metal M and m is equal to or smaller than the oxidation state of the metal M. In some embodiments, B is selected from the group comprising an alcoholate (RO-), a carboxylate (RCOO-), an alkoxycarbonate, nitrate or a halide anion (selected from chloride, bromide and iodide). In some embodiments, B is selected from chloride, methanolate, ethanolate, propoxylate, buthylate, acetate or lactate.

The sol solution comprising fully fluorinated, partially fluorinated or non-fluorinated additive particles $MF_mB_{x-m}$ can be provided by a method as described above, using no additional amount of HF, an additional amount of HF ($n_{adHF}$) or using a stoichiometric amount of HF with respect to the applied magnesium precursor or magnesium precursor and calcium additive (see the discussion above concerning essentially quantitative conversion of the additive). The sol solution can comprise, depending on the conditions applied, only $MB_x$, $MF_x$ or $MF_mB_{x-m}$ additives as well as mixtures

thereof. (e.g. $MF_mB_{x-m}$ / $MB_x$ or $MF_x$ / $MF_mB_{x-m}$ / $MB_x$). Additionally unfluorinated magnesium particles or, in some cases, a "CaClF" species may be present.

In some embodiments, the sol solution is obtained according to a method described according to the first aspect of the invention, wherein the metal additive is added after the fluorination with HF (computed according to the amount of magnesium precursor or magnesium precursor and calcium additive only). In some embodiments, the magnesium fluoride sol solution of the invention comprises an amount of additive particles selected from the group comprising $CaCl_2$, $Ca(NO_3)$, $MgCl_2$, $Ca(Lac)_2$, $Ca(OEt)_2$, $Mg(OEt)_2$, LiCl, $C_8H_{20}O_4Si$, $Zr(O^nPr)_4$, $Ti(O^iPr)_4$, $Al(O^iPr)_3$, $AlCl_3$, $Sb(OAc)_3$, $Sn(OAc)_2$ or partially fluorinated particles thereof. In some embodiments, the magnesium fluoride sol solution of the invention comprises $CaCl_yF_{2-y}$, derived from calcium additives.

Where a particular application requires, the properties of the $MgF_2$-layers can be adjusted regarding their mechanical and/or optical properties by introducing further $M^{n+}$-additives (see preceding section), by the method described previously. Surprisingly, if these metal additive compounds are added to the magnesium carboxylate, in particular magnesium acetate or magnesium lactate, solution before adding the requested stoichiometric amount HF (calculated according to the amount of magnesium and metal additive, as described previously), the resulting $MgF_2$-layers show significantly improved and distinctly different properties as compared to the post addition of metal fluorides e.g. $CaF_2$-, $SrF_2$-, $AlF_3$-, or $ZnF_2$-particles to the synthesized pure $MgF_2$-sol. The inventor believes that the prior addition of the metal additive compound - before adding the requested stoichiometric amount HF - will positively influence the seed crystal and particle generation and the non-magnesium additives will be better dispersed.

Where a particular application requires, the properties of the $MgF_2$-layers can be adjusted regarding their mechanical and/or optical properties by introducing further metal additives (see preceding section), by the method described above. If these metal additive compounds are added to the magnesium precursor or magnesium precursor and calcium additive solution after adding the requested stoichiometric amount of HF (calculated according to the amount of magnesium precursor or magnesium precursor and calcium additive) and no additional amount of HF or an additional amount of HF, which is less than the stoichiometric amount with respect to the amount of metal additive (see discussion concerning a partially fluorinated additive) the resulting $MgF_2$-layers show significantly improved and distinctly different properties as compared to a solution where metal additives are added before HF is added to the sol reaction. Thus, even better result can be obtained, if the metal additive is added after adding the requested stoichiometric amount of HF.

The inventors believe, without being bound by this theory, that this is due to a higher amount of a free electrolyte concentration and the reaction of eventually unreacted HF (as discussed) with the metal additive, which leads to a stabilization of the particles in the sol.

Where a particular application requires, the properties of the $MgF_2$-layers can be adjusted regarding their mechanical and/or optical properties by introducing further $M^{n+}$-additives (by way of non-limiting example, $M^{n+}$ = $Li^+$, $Mg^{2+}$, $Ca^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3+}$ or $Sb^{5+}$) directly to the $Mg^{2+}$-precursor solution. Surprisingly, if these precursors are added to the $Mg^{2+}$-precursor solution after adding the requested stoichiometric amount HF, with respect to the amount of magnesium precursor the resulting $MgF_2$-layers show significantly improved and distinctly different properties as compared to the prior addition of e.g. $Ca(OAc)_2$-, $Al(O^iPr)_3$-, or $SiO_2$-particles to the magnesium precursor. The same may apply for further metal additives if a magnesium precursor and a calcium additive are used, as discussed above.

The magnesium fluoride sol solution of the invention can comprise an amount of additive particles selected from the group comprising LiF, $CaF_2$, $SrF_2$, $BaF_2$, $AlF_3$, $ZrF_4$, and / or $ZnF_2$. In some embodiments, the sol solution can comprises metal additives according to a method described above, wherein the metal additive is added after the fluorination with HF (computed according to the amount of magnesium carboxylate only).

The magnesium fluoride sol solution of the invention can comprise an amount of additive particles selected from the group comprising $MgCl_2$, $CaCl_2$, $Ca(NO_3)_2$, $Mg(OAc)_2$, $Ca(OLac)_2$, $Ca(OC_2H_5)$, LiCl, $C_8H_{20}O_4Si$, $Zr(O^nR)_4$, $Ti(O^iR)_4$, $Al(O^iPr)_3$

The sol solution according to the invention comprises - based on $^{19}F$-NMR spectra (cf. Fig 2) - characteristic patterns for the $MgF_2$ particles synthesized this way can be obtained thus allowing distinction from $MgF_2$-materials obtained by different synthetic approaches.

The sol solutions according to the invention comprise the presence of 1,6 parts of lactic acid per part magnesium, 1,4 parts of acetic acid per part magnesium.

The magnesium fluoride sol solution comprises

a. an amount of calcium particles in the range of 1 : 100 to 1 : 1, as measured in molar equivalent of calcium to magnesium, or

b. an amount of calcium particles in the range of 1 : 100 to 1 : 1, as measured in molar equivalent of calcium to magnesium and an amount of additive particles in the range of 1 : 100 to 1 : 5, as measured in molar equivalent of additive to the sum of magnesium and calcium, or

c. an amount of additive particles in the range of 1 : 100 to 1 : 5, as measured in molar equivalent of additive to magnesium.

In some embodiments, the amount of said additive particles in the sol solution, in relation to the amount of $MgF_2$ particles, is 1:5 to 1: 100, as measured in molar equivalent of additive to magnesium. In some embodiments, the metal additive compound is present in an amount of 0.2 mole (1:5) to 0.01 mole (1:100) per mole magnesium. In some embodiments, the metal additive compound is present in an amount of 0.2 mole (1:5) to 0.04 mole (1:25) per mole magnesium. In some embodiments, the metal additive compound is present in an amount of 0.2 mole (1:5) to 0.08 mole (1:12.5) per mole magnesium. In some embodiments, the metal additive compound is present in an amount of 0.1 mole (1:10) to 0.04 mole (1:25) per mole magnesium. In some embodiments, the metal additive compound is present in an amount of 0.04 mole (1:25) to 0.01 mole (1:100) per mole magnesium.

In some embodiments, the additive is a calcium additive compound, which is present in an amount of 1 mole (1:1) to 0.01 mole (1:100) per mole magnesium. In some embodiments, the additive is present in an amount of 0.99 mole (99:100) to 0.01 mole (1:100) per mole magnesium. In some embodiments, the additive is a calcium additive compound, which is present in an amount of 0.99 mole (99:100) to 0.01 mole (3:10) per mole magnesium. In some embodiments, the additive is present in an amount of 1 mole (1:1) to 0.25 mole (1:4) per mole magnesium. In some embodiments, the additive is present in an amount of 1 mole (1:1) to 0.4 mole (1:2.5) per mole magnesium. In some embodiments, the additive is present in an amount of 0.67 mole (1:1.5) to 0.4 mole (1:2.5) per mole magnesium. In some embodiments, the additive is present in an amount of 1 mole (1:1) to more than 0.25 mole per mole magnesium. In some embodiments, the additive is present in an amount of 0.4 mole (1:2.5) to more than 0.25 mole per mole magnesium. In some embodiments, the additive is present in an amount of 0.99 mole (1:99) to more than 0,25 mole per mole magnesium.

In some embodiments, said amount of metal additive particles in the sol solution, is 1:5 to 1: 100, as measured in molar equivalent of additive to magnesium precursor or magnesium precursor and calcium additive (as discussed above). In some embodiments, the metal additive compound is present in an amount of 0.2 mole (1:5) to 0.01 mole (1:100) per mole to magnesium or calcium and magnesium. In some embodiments, the metal additive compound is present in an amount of 0.2 mole (1:5) to 0.04 mole (1:25) per mole to magnesium or calcium and magnesium. In some embodiments, the metal additive compound is present in an amount of 0.2 mole (1:5) to 0.08 mole (1:12.5) per mole to magnesium or calcium and magnesium. In some embodiments, the metal additive compound is present in an amount of 0.1 mole (1:10) to 0.04 mole (1:25) per mole to magnesium or calcium and magnesium. In some embodiments, the metal additive compound is present in an amount of 0.04 mole (1:25) to 0.01 mole (1:100) per mole to magnesium or calcium and magnesium. This applies also for essentially completely fluorinated, partially fluorinated or essentially unfluorinated metal additives.

In some embodiments, the calcium additive precursor is present in an amount of 0.99 mole (99:100) to 0.1 mole (1:10) per mole magnesium. In some embodiments, the calcium additive precursor is present in an amount of 0.99 mole (99:100) to 0.25 mole (1:4) per mole magnesium. In some embodiments, the calcium additive precursor is present in an amount of 0.35 mole (7:20) to 25 mole (1:4) per mole magnesium.

It is understood that the sol may comprise in particular the specified compounds and specified amounts of these compounds as described in the embodiments concerning the method for obtaining a calcium sol.

The magnesium fluoride sol solution of the invention is characterized by by nanoscopic scale $MgF_2$ and $MB_x$ or $MgF_2$ and $MF_x$ particles with particle that have a diameter size of smaller than (<)< 50 nm, < 40 nm, < 30 nm, < 20 nm, < 10 nm, < 5nm, < 4 nm or < 3 nm. In some embodiments, the particle diameter size is smaller than (<) 20 nm, < 15 nm, < 10 nm, < 7 nm, < 5 nm, < 4 nm, or < 3 nm. In some embodiments, the particle size ranges from 3 to 18 nm. In some embodiments, the particle size ranges from 8 to 18 nm. In some embodiments, the particle size ranges from 8 to 12 nm. In some embodiments, the particle size ranges from 3 to 10 nm. In some embodiments, the particle size ranges from 4 to 8 nm.

In some embodiments, the magnesium fluoride sol solution comprises $MgF_2$ particles smaller than 20 nm in a non-aqueous solvent and/or calcium particles that are smaller than 15 nm in diameter and/or metal additive particles that are smaller than 20 nm in diameter.

In some embodiments, the magnesium fluoride sol solution comprises $MgF_2$ particles smaller than 20 nm in a non-aqueous solvent, characterized by the presence of 1.6 parts of lactic acid per part magnesium 1.4 parts of acetic acid per part magnesium.

In some embodiments, the magnesium fluoride sol solution comprises additive particles which are smaller than 20 nm in diameter.

The particle size can be adjusted by varying the parameters of the process of the invention. Formation of smaller particles is favored at temperatures between 20°C and 30°C, slow addition of HF (over 30 to 60 minutes) and very high speeds of stirring (of about 600 to 1000 rpm rpm). In some embodiments a stirring of about 600 to 1000 rpm is applied. Lower temperatures or slower stirring will generally favor formation of larger particles.

Lower temperatures or slower stirring will generally favor formation of larger particles.

The solvent may be selected as discussed above in respect to the method of the invention.

In some embodiments, the non-aqueous solvent is methanol. In some embodiments, the non-aqueous solvent is ethanol or isopropanol.

An important parameter in handling nanoparticle sol solutions for industrial applications is the concentration of the solution, with higher concentrations allowing more options to the user. High concentrations additionally lead to lower costs in transporting and storing the solution prior to its use. The sol solutions of the invention show distinctly greater stability at high concentrations when compared to sol solutions of the art.

In some embodiments, the magnesium fluoride sol solution of the invention has a magnesium content of larger than (>) 0.2 mol/L, 0.4 mol/L, 0.5 mol/L, 0.6 mol/L, 0.7 mol/L, 0.8 mol/L, 0.9 mol/L, 1.0 mol/L, 1.2 mol/L, 1.4 mol/L, 1.6 mol/L, 1.8 mol/L or 2.0 mol/L. The concentration of the $MgF_2$-sol can range from 0.05 to 2 mol/l. In some embodiments, the concentration is between 0.15 and 0.5 mol/l. In some embodiments, the magnesium fluoride sol solution of the invention has a magnesium content equal to or larger than 0.2 mol/L, 0.3 mol/L, 0.4 mol/L, 0.5 mol/L, 0.6 mol/L, 0.7 mol/L or 0.8 mol/L. In some embodiments, the magnesium fluoride sol solution of the invention has a magnesium content of 0.6 mol/L. In some embodiments, the magnesium fluoride sol solution using ethanol or isopropanol, particularly ethanol, of the invention has a magnesium content in the range of about 0.2 mol/L to 0.8 mol/L, in particular of about 0.2 mol/L to 0.6 mol/L. In some embodiments, the magnesium fluoride sol solution using ethanol or isopropanol of the invention has a magnesium content in the range of about 0.2 mol/L to 0.8 mol/L, in particular 0.2 mol/L to 0.4 mol/L.

To some extent, the maximum concentration of the sol solution has been found to depend on the educt components. One particularly stable sol is obtained by reacting magnesium lactate in methanol or ethanol, wherein solutions exceeding 1 mol/l can be obtained and stored without losing the distinct clarity of the solution over many months.

In some embodiments, the dynamic viscosity of the sol solution is in the range of 1.0 to 8.0 mPa s, in particular in the range of about 1.3 to 3.5 mPa s.

In some embodiments, the magnesium fluoride sol solution using ethanol or isopropanol of the invention has a magnesium content in the range of about 0.2 mol/L to 0.8 mol/L, in particular of about 0.2 mol/L to 0.6 mol/L. In some embodiments, the magnesium fluoride sol solution using ethanol or isopropanol of the invention has a magnesium content in the range of about 0.2 mol/L to 0.4 mol/L.

One particularly stable sol is obtained by reacting magnesium lactate or magnesium acetate in methanol, ethanol, or isopropanol (according to a method as described above), wherein solutions in the range of about 0.2 mol/L to 0.4 mol/L can be obtained and stored without losing the distinct clarity of the solution over many months.

In some embodiments, the magnesium fluoride sol solution of the invention is stable at room temperature for more than six weeks. Such stability is of advantage not only because gelling of the sol solution (which is generally irreversible) leads to material loss, but also because the recipients used to store the gelled solution need to be cleaned, which can be a laborious and expensive task.

According to a fourth aspect of the invention, a method for coating a surface is provided, comprising the steps of

a. providing a magnesium fluoride sol solution prepared according to the method related as the first aspect of the invention or a sol solution according to the third aspect of the invention,

b. contacting the surface with the magnesium fluoride sol solution,

c. drying said surface; and

d. exposing said surface to a thermal step, wherein said surface is exposed to a temperature ranging from 15°C to 500°C, in particular 300 to 500 °C.

In some embodiments, a method for coating a surface is provided, comprising the steps of

a. providing a magnesium fluoride sol solution prepared according to the method related as the first aspect of the invention;

b. contacting the surface with the magnesium fluoride sol solution;

c. drying said surface; and

d. exposing said surface to a first thermal step, wherein said surface is exposed to a first temperature ranging from 15°C to 100°C.

The magnesium fluoride sol solution has been obtained, or has the qualities of a sol solution that can be obtained, by a method according to the first aspect of the invention. Alternatively, a sol solution having the qualities described above is employed.

A number of methods of applying the sol solution to the surface offer themselves. In some embodiments, the coating is applied by spin coating or by dip-coating. In some embodiments, the coating is applied by spraying. The person skilled in the art will recognize the most suitable process of application depending on the shape of the substrate surface to be coated.

In some embodiments, the dynamic viscosity of the sol solution is in the range of 1.0 to 8.0 mPa s, in particular in the range of about 1.3 to 3.5 mPa s.

The drying and first thermal step allow for the removal of solvent and residual components of the sol solution, mainly the lactic acid formed, and any additional acid formed by reaction of any eventual metal additive compound(s) with HF, or any subsequent reaction products derived thereof, such as esters. Depending on the compounds used in making the sol solution, the requirements for time and temperature of the process will vary from room temperature to temperatures higher than 100°C, and from a few minutes to several hours. The drying and first thermal step allow for the removal of a large part of solvent and residual components of the sol solution, however, not all these components can be removed completely. Some will remain under these conditions in pores of the coating. The aim of the drying and first thermal step is to provide a smear-resistant coating.

Depending on the compounds used in making the sol solution, the drying may be applied at room temperature for a few minutes to several hours. In some embodiments, the drying takes place, during the time interval between applying the coating on the surface and exposing the surface to a thermal step (e.g. the time between removal of the surface from the sol solution after dipping the surface in the sol solution and bringing the surface to an application for exposing the surface to thermal step). The drying allows for the removal of a large part of solvent and residual components of the sol solution, however, not all these components can be removed completely. Some will remain under these conditions in pores of the coating. The aim of the drying is to provide a smear-resistant coating.

In some embodiments, the drying step occurs for 10 min at room temperature.

In some embodiments, a thermal step is applied, wherein said surface is exposed to a temperature ranging from 100°C to 500°C. In some embodiments a temperature in the range of about 250°C to 500°C is used. In some embodiments a temperature in the range of about 400°C to 500°C is used. This thermal step may be employed to sinter the coating, leading to improved mechanical stability.

In some embodiments, the thermal step will be applied to the surface in such a way that the surface is directly exposed to the necessary temperature, e.g. the surface is exposed to 450 C. Alternatively the surface can be exposed to a slowly increasing temperature interval until the necessary temperature (e.g. 450 °C) is reached. Alternatively higher temperatures may be applied if necessary. In some embodiments, the thermal step has a duration of 5 to 30 min. In all cases these thermal treatment can be performed at ambient pressure. In some embodiments, the thermal step (at a temperature of 450°C) has a duration of 15 min. In some embodiments, the coating is allowed to cool down slowly over longer period of time (preferential between 100 and 150 min). The slow cooling of the heated coating will result in better characteristics concerning the mechanical properties of the coating. In some embodiments, the surface is exposed after the drying and prior to the thermal step to an additional drying temperature, wherein said surface is exposed to a drying temperature ranging from 15°C to 100°C for a certain amount of time.

In some embodiments, 80°C is used for the drying and first thermal step occurs for 10 min.

In some embodiments, after the first thermal step, a second thermal step is applied wherein said surface is exposed to a second temperature ranging from 300°C to 500°C. This second thermal step may be employed to sinter the coating, leading to improved mechanical stability.

In some embodiments, after the first thermal step, a second thermal step is applied (two-step thermal process), wherein said surface is exposed to a second temperature ranging from 100°C to 500°C. In some embodiments a temperature in the range of about 250°C to 500°C is used. In some embodiments a temperature in the range of about 400°C to 500°C is used.

In some embodiments, one thermal post-treatment is applied after depositing the $CaF_2$-layer.

In some embodiments, a two-step thermal process is applied, wherein the substrate is treated in a first thermal step between room temperature and 100°C, and in a second thermal step at between 250 and 550°C. In some embodiments, the first thermal step has a duration of 5 to 60 min. In some embodiments, the second thermal step has a duration of 5 to 30 min. In one embodiment, a two-step thermal process has a first thermal step between 70 and 90°C for 5 to 60 min, and a second thermal step between 300°C and 500°C for 5 to 30 min. In all cases these thermal treatment can be performed at ambient pressure. In some embodiments, after the additional drying temperature, the thermal step is applied (two-step thermal process), wherein said surface is exposed to a temperature ranging from 100°C to 500°C. In some embodiments the temperature of the thermal step is in the range of about 250°C to 500°C is used. In some embodiments, a temperature in the range of about 400°C to 500°C is used for the thermal step. This thermal step may be employed to sinter the coating, leading to improved mechanical stability.

In some embodiments, the thermal step will be applied separately after the additional drying temperature. It is thus possible to allow for a cooling of the coating after the additional drying temperature. In some embodiments, the thermal step will be applied directly after the application of the additional drying temperature, thus, no cooling of the coating is allowed until after the thermal step is finished. In some embodiments, the thermal step will be applied directly after the additional drying temperature, wherein the coating is heated slowly until the necessary end temperature is reached (e.g. 450° C).

This second thermal step may be employed to sinter the coating, leading to improved mechanical stability.

In some embodiments, the second thermal step will be applied separately after the first thermal step. It is thus possible to allow for a cooling of the coating after the first thermal step. In some embodiments, the second thermal step will be applied directly after the first thermal step, thus, no cooling of the coating s allowed until after the second thermal step is finished.

In some embodiments, the first thermal step has a duration of 5 to 60 min. In some embodiments, the second thermal step has a duration of 5 to 20 min. In one embodiment, a two-step thermal process has a first thermal step between 70 and 90°C for 5 to 60 min, and a second thermal step between 300°C and 500°C for 5 to 30 min. In all cases these thermal treatment can be performed at ambient pressure. In some embodiments, the first thermal step (temperature 80°C) has a duration of 10 min, wherein the second thermal step (at a temperature of 450°C) has a duration of 15 min. In some embodiments, the coating is allowed to cool down slowly over longer period of time (preferential between 100 and 150 min). The slow cooling of the heated coating will result in better characteristics concerning the mechanical properties of the coating.

Any of the sol solutions provided herein will result in porous and mechanically robust layers that can be obtained in just a single coatings step. If a sol solution prepared from magnesium acetate is used practically no thermal decomposition can be observed during the first and/or second thermal step. Thus, no byproducts, in particular no solid carbonaceous residue due to the decomposition, will have a negative influence on the characteristic of the coatings.

According to a fifth aspect of the invention, a surface coating comprising magnesium fluoride nanoparticles is provided. This coating is characterized by high porosity, a refractive index of between $n_{500}$= 1.18 and $n_{500}$= 1.30 and high scratch resistance).

According to one alternative of this fourth aspect of the invention, a surface coating comprising magnesium fluoride nanoparticles is provided, characterized by a refractive index of between $n_{500}$= 1.18 and $n_{500}$= 1.30, and a porosity of 30% to 45%. According to yet another alternative of this fourth aspect of the invention, a surface coating comprising magnesium fluoride nanoparticles is provided, characterized by a refractive index of between $n_{500}$= 1.18 and $n_{500}$= 1.35, a porosity of 25% to 40% and an amount of additive particles selected from the group comprising $MgCl_2$, $Mg(OAc)_2$, $CACl_2$, $Ca(NO_3)_2$, $Ca(OLac)_2$, $LiCl$, $C_8H_{20}O_4Si$, $Zr(O^nR)_4$, $Ti(O^iR)_4$, $Al(O^iPr)_3$, $LiF$, $CaF_2$, $SrF_2$, $AlF_3$, $ZrF_4$, and / or $ZnF_2$, said amount being 1:5 to 1: 100, as measured in molar equivalent of additive to magnesium.

In some embodiments, the surface coating comprises an amount of additive particles selected from the group comprising $M^{n+}B_x$ metal additive particles, wherein $M^{n+}$ additives selected from the group of $Mg^{2+}$, $Ca^{2+}$, $Sr^{2+}$, $Sn^{2+/4+}$, $Zn^{2+}$, $Al^{3+}$, $Si^{4+}$, $Ti^{4+}$, $Zr^{4+}$, $Sb^{3+}$ and B can be an inorganic or organic compound, as described previously, said amount being 1:5 to 1: 100, as measured in molar equivalent of additive to magnesium. In one embodiment, the amount of additive ranges from 1:10 (10 %) to 1:25 (4%) as measured in molar equivalent of additive to magnesium. In one embodiment, the amount of additive ranges from 1:12.5 (8%) to 1:25 (4%) as measured in molar equivalent of additive to magnesium.

In some embodiments, the surface coating comprises an amount of additive particles selected from LiX, wherein X is a halogen, said amount being 1:5 to 1: 100 (20% to 1%), as measured in molar equivalent of additive to magnesium. In one embodiment, the amount of LiX additive ranges from 1:10 (10%) to 1:100 (1%) as measured in molar equivalent of additive to magnesium. In one embodiment, the amount of LiX additive ranges from 1:25 (4%) to 1:100 (1%) as measured in molar equivalent of additive to magnesium. In one embodiment, the amount of LiX additive is 1:100 (1%) as measured in molar equivalent of additive to magnesium.

In some embodiments, the surface coating of the invention is characterized by a porosity of 30% to 45%.

In some embodiments, the surface coating of the invention is characterized by a refractivity index between $n_{500}$= 1.19 and $n_{500}$= 1.26.

In the deposited $MgF_2$-layer, the additive compounds incorporated into the AR-layers are X-ray amorphous. The high degree of structural distortion caused by the invented synthesis approach that establishes exciting optical beside exciting mechanic properties.

According to yet another alternative of this fourth aspect of the invention, a surface coating comprising magnesium fluoride nanoparticles is provided, characterized by a refractive index of between $n_{500}$ = 1.18 and $n_{500}$ = 1.35, a porosity of 25% to 40% and an amount of $MF_mB_{x-m}$ particles, wherein M is $Ca^{2+}$ derived from the calcium additive, B can be a chloride or an oxide, x is equal to the oxidation state of the metal M and m is equal to or smaller than the oxidation state of the metal M, said amount being 1:1 to 1: 100, as measured in molar equivalent of additive to magnesium.

According to yet another alternative of this fourth aspect of the invention, a surface coating comprising magnesium fluoride nanoparticles is provided, characterized by a refractive index of between $n_{500}$ = 1.18 and $n_{500}$ = 1.35,

a porosity of 25% to 40% and an amount of $MF_mB_{x-m}$ particles, wherein M is selected from the group of $Li^+$, $Mg^{2+}$, $Ca^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3+}$, $Sb^{5+}$, B can be a chloride or an oxide, x is equal to the oxidation state of the metal M and m is equal to or smaller than the oxidation state of the metal M, said amount being 1:5 to 1: 100, as measured in molar equivalent of additive to magnesium.

In some embodiments, a surface coating comprising magnesium fluoride nanoparticles is provided, characterized by a refractive index of between $n_{500} = 1.18$ and $n_{500} = 1.35$, a porosity of 25% to 40% and an amount of $MF_mB_{x-m}$ particles, wherein M is $Ca^{2+}$ derived from the calcium additive, B can be a chloride or an oxide, x is equal to the oxidation state of the metal M and m is equal to or smaller than the oxidation state of the metal M, said amount being 1:1 to 1: 100, as measured in molar equivalent of additive to magnesium and an additional amount of $MF_mB_{x-m}$ particles, wherein M is $Ca^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3+}$, $Sb^{5+}$, B can be a chloride or an oxide, x is equal to the oxidation state of the metal M and m is equal to or smaller than the oxidation state of the metal M, said amount being 1:5 to 1: 100, as measured in molar equivalent of additive to magnesium.

In general, if magnesium (or another metal) chloride or fluoride particles are present in the sol, they remain as the respective chlorides or fluorides in the surface coating, however, the other applied ligands will yield the respective magnesium (or other applied metal) oxides.

In some embodiments, the surface coating comprises an amount additive particles $M^{n+}F_mB_{x-m}$ with m equal to the oxidation state n of the metal M or with m equal to 0 or with m selected from the range of $0 < m < n$ or mixtures thereof, said amount being 1:5 to 1: 100, as measured in molar equivalent of additive to magnesium.

In some embodiments, the surface coating comprises amount of additive particles selected from the group comprising CaCl2, $Ca(NO_3)$, MgCl2, LiCl, $C_8H_{20}O_4Si$, $Zr(O^nPr)_4$, $Ti(O^iPr)_4$, $Al(O^iPr)_3$ or $AlCl_3$ or partially fluorinated species thereof, in particular the "CaClF" species, or LiF, $CaF_2$, $SrF_2$, $BaF_2$, $AlF_3$, $ZrF_4$, and / or $ZnF_2$, said amount being 1:5 to 1: 100, as measured in molar equivalent of additive to magnesium.

In some embodiments, the surface coating comprises an amount of additive particles selected from the group comprising $M^{n+}B_x$ metal additive particles, wherein $M^{n+}$ additives selected from the group of $Mg^{2+}$, $Ca^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3+}$, $Sb^{5+}$ and B can be an inorganic or organic compound, as described previously, said amount being 1:5 (20 %) to 1:100 (1 %), as measured in molar equivalent of additive to magnesium. In some embodiment, the amount of additive ranges from 1:10 (10 %) to 1:25 (4 %) as measured in molar equivalent of additive to magnesium. In one embodiment, the amount of additive ranges from 1:12.5 (8 %) to 1:25 (4 %) as measured in molar equivalent of additive to magnesium.

In some embodiments, more than one metal additive according to the above mentioned embodiments may be present in the sol. In some embodiments, "CaClF" particles (see the discussion concerning $CaCl_yF_{2-y}$) are present in the surface coating.

In some embodiments, the surface coating comprises an amount of chloride in the range of 1.0 % to 5.5 % in particular 1.5 % to 3.0 %, as measured with a potentiometric determination of the solid layer with respect to the remaining elements of the surface coating. Moreover, EDX investigations clearly evidence the presence of chloride in the coating layer being homogenously distributed within the magnesium fluoride layer.

Reference is also made to the above mentioned embodiments with different amounts of applied metal additives. The specifically mentioned ranges of these embodiments can be applied to the above mentioned coating.

In some embodiments, the surface coating of the invention is characterized by a porosity of 25% to 40 %. The porosity allows the coating to comprise a refractivity index which is lower than the refraction index of $MgF_2$ while comprising a good mechanical stability. In some embodiments, the surface coating of the invention is characterized by a refractivity index between $n_{500}= 1.19$ and $n_{500}= 1.26$.

In the deposited $MgF_2$-layer, the additive compounds incorporated into the AR-layers are X-ray amorphous. The high degree of structural distortion caused by the invented synthesis approach that establishes exciting optical beside exciting mechanic properties.

According to a fifth aspect of the invention, a metal, glass or organic polymer surface having a surface coating according to any of the above aspects of the invention is provided.

In some embodiments, the surface is a planar or a tubular glass surface. In some embodiments, the surface is a metal surface. In some embodiments, the surface is an organic polymer surface.

In some embodiments, the surface is a thermoplast surface. In some embodiments, the surface is a lens surface in an optical system for a camera, an ophthalmological lens, a binocular, a microscope or similar optical device.

In some embodiments, the surface is a lens surface in an optical system for a camera, an ophthalmological lens, a binocular, a microscope or similar optical device.

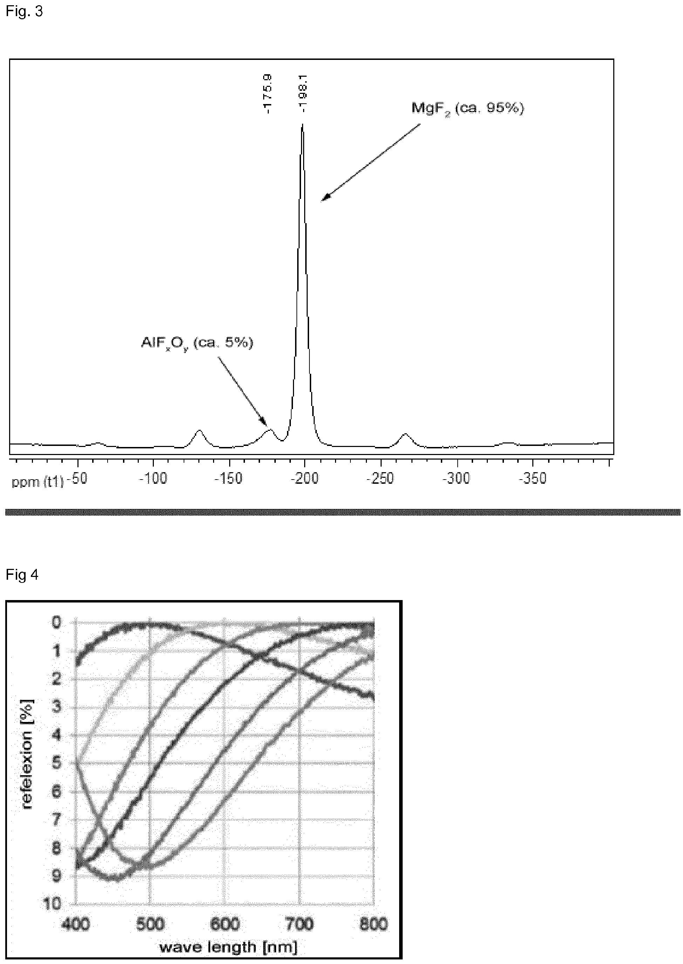

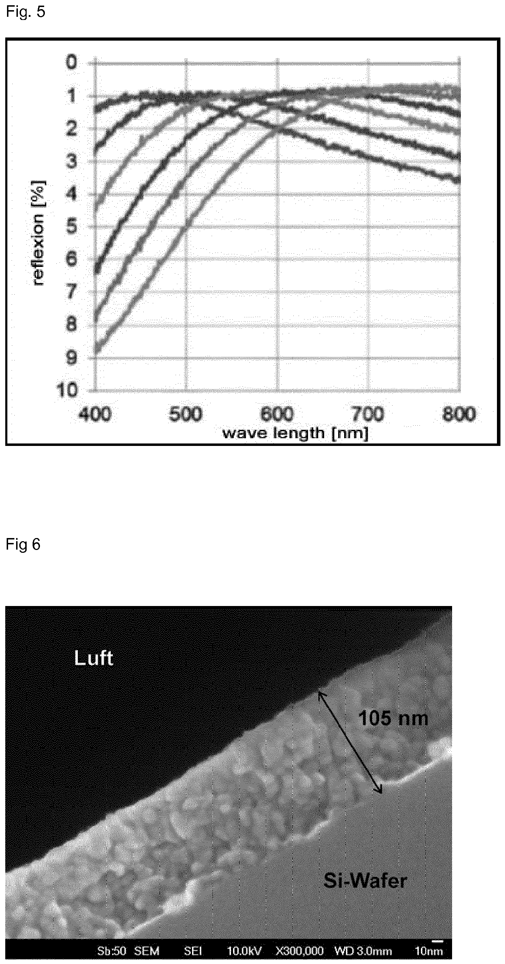

In some embodiments, a $MgF_2$-layer obtained by a process according to the invention exhibits a refractive indexes ranging from $n_{500} = 1.18$ up to $n_{500} = 1.35$ depending on the process management and the resulting composition of the $MgF_2$-sol, which depend on the amount of water carried into or produced by the sol reaction, the nature of eventual additives (Li, Ca, Sr, Al, Si, Zr, Zn, Sn, Sb, Ti etc.) and their concentration, and the temperature of the post-treatment. As a rule it seems that some additives increase the sintering ability of the $MgF_2$, thus, resulting in an increased mechanical robustness of the AR-layer. Whereas al- and Li-additives do not impact the exciting optical properties (cf. Fig. 4), additives like Sn,Ti, or Zr (cf. Fig. 5) decrease slightly the optical transmittance due to their higher refractive indices. Hence, the optimum content of additives has to be used in order to obtain high optical transmittance and high mechanical stability of the AR-$MgF_2$-layers.

In some embodiments, a $MgF_2$-layer obtained by a process according to the invention exhibits a refractive indexes ranging from $n_{500}$= 1.18 up to $n_{500}$= 1.35 depending on the process management and the resulting composition of the $MgF_2$-sol, which depend on the amount of water carried into or produced by the sol reaction, the nature of eventual additives (Mg, Sr, Al, Si, Zr, Zn etc., in particular $Li^+$, $Mg^{2+}$, $Ca^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3+}$, $Sb^{5+}$) and their concentration, and the temperature of the post-treatment. Generally it seems that some additives increase the sintering ability of the $MgF_2$, thus, resulting in an increased mechanical robustness of the AR-layer, in particular $CaCl_yF_{2-y}$ additives. Whereas Al- and Li-additives do not impact the exciting optical properties, additives like Sn, Ti or Zr decrease slightly the optical transmittance due to their higher refractive indices. The inventor has found that in particular additive components (which can be a completely, a partially or a non-fluorinated compound as described above) with a low melting point increase the sintering ability and allow an increased mechanical robustness while comprising a higher porosity, thus, the influence on the optical properties is small and only a slight decrease, if at all, of the optical transmittance can be observed. Hence, the optimum content of additives has to be used in order to obtain high optical transmittance and high mechanical stability of the AR-$MgF_2$-layers as described above.

Addition of Ti, Zr, Al, Si, and Ca result in improved scratch resistance of the AR-layers formed from those sols. Although there is no definite experimental evidence, it is speculated that intermediately formed chlorofluorides and/or alkoxidefluorides of these metals cause decreased sintering temperature, that is they act as a kind of flux, and thus cause increased mechanic stability of the layers.

In some embodiments, for which the surface that is to be coated is an organic polymer surface, methanol based sol solutions are preferred. In some embodiments, the surface to be coated is an organic polymer surface and the sol solution comprises between 0% and 20% of additive particles selected from the group $MB_x$ or $MF_mB_{x-m}$ as described previously, in particular $CaCl_yF_{2-y}$. In some embodiments, for which the surface that is to be coated is an organic polymer surface, methanol based sol solutions are preferred In some embodiments, the surface to be coated is an organic polymer surface and the sol solution comprises between 0% and 2% of additive particles selected from the group comprising $CaF_2$, $SrF_2$, $AlF_3$, $SiF_4$, $ZrF_4$, $TiF_4$, and / or $ZnF_2$.

In some embodiments, the surface is an organic polymer surface pretreated by a layer of polysilazane or by an inorganic network obtained through controlled hydrolysis and condensation of organically modified Si alkoxides (ORMOCER, Fraunhofer-Institut für Silicatforschung ISC, Würzburg, Germany). In some embodiments, the surface is an organic polymer surface pretreated by corona poling.

In some embodiments, a $MgF_2$-layer obtained by a process according to the invention exhibit a mechanic stability and scratch resistance superior to that of $SiO_2$ porous AR layers known in the art.

The AR layers obtained according the present invention are characterized by an easy production starting from common compounds. The sols as prepared by the method of the invention can directly be used for coating any substrate.

No other components like metal complexes, organic binders, co-polymers etc. have to be added to the sols in order to create fine-tuned porosity inside the layers. For some polymers, the presence of a mediator layer below or a cover layer above the $MgF_2$-layer is not necessary, but may be preferred to enhance optical or mechanical properties of the material.

The porosity of these layers can be tuned from 10 to 50%. In some embodiments, it ranges from 25 to 40%. The synthesis conditions for achieving a certain porosity are in general determined by the sol synthesis conditions. As a rule, porosity of pure $MgF_2$ layers can be enhanced by addition of aforementioned additives during the sol synthesis.

Different to porous $SiO_2$ layers, $MgF_2$-layers obtained by the process of the present invention exhibit high degree of hydrophobicity (the contact angle after the annealing process at 450°C is above 80°). This quality results in markedly low water uptake, which for some embodiments can be below 10% in 90% humidity, whereas it is above 90% in case of a porous $SiO_2$-layer.

In some embodiments, AR $MgF_2$ layers obtained according to the method of present invention have a thicknesses ranging from 20 to 600 nm. Some embodiments are monolayers having a thicknesses ranging from 80 to 120 nm.

In some embodiments, AR $MgF_2$ layers obtained according to the method of present invention show optical transmission between 97.5 and 99.8% depending on the content of additive $M^{n+}$ (cf. also Fig. 5) In general, the lower the $M^{n+}$-content, the higher is the optical transmission. Thus, $MgF_2$-layers produced from $MgF_2$-sol with 20% $CaCl_2$-additione yields a optical transmittance of 99,9%. In contrast, a $MgF_2$-layer formed from a Sol containing 20mol% $Si(OC_2H_5)_4$ exhibits a transmittance of 98.5%. As a rule, the refractive index of the additive-metal compound affects the overall refractive index (transmittance) of the layer according to its concentration in the Ar-layer. In general, the lower the $M^{n+}$-content, the higher is the optical transmission. Al- and Li-additives do not impact the optical properties, additives like Sn, Ti or Zr decrease slightly the optical transmittance due to their higher refractive indices. In general, the lower the additive content, the higher is the optical transmission.

In some embodiments, AR-MgF$_2$ layers obtained according to the method of present invention are characterized by high mechanical stability, especially scratch resistance according DIN EN 1096-2 (crockmeter test).

Wherever alternatives for single features such as the nature of magnesium carboxylates, solvent, additive etc. are laid out herein as "embodiments", it is to be understood that such alternatives may be combined freely to form discrete embodiments of the entire process, sol solution, coating method or coating provided herein.

The invention is further illustrated by the following examples and figures, from which further advantages and embodiments of the invention may be derived.

Short description of the figures

Fig. 1       shows the change in the optical transmittance of a coated material as a function of the refractive index of the thin film;

Fig. 2       shows a typical $^{19}$F-NMR-spectrum of a MgF$_2$ sol to which 5mol% TEOS was added according 6) with the characteristic chemical shift of F in MgF$_2$ at -198ppm. The small peaks between -148 and -155 are characteristic for partially fluorinated SiF$_x$(OR)$_y$ species;

Fig.3       shows a typical $^{19}$F-NMR-spectrum of a MgF$_2$ sol to which 5mol% Al(O$^i$Pr)$_3$ was added according 12) with the characteristic chemical shift of F in MgF$_2$ at -198ppm. The small peak between at around -179 pm is characteristic for partially fluorinated AlF$_x$(OR)$_y$ species;

Fig. 4       Optical transmittance of an AR-MgF$_2$-layer obtained from Sol of example 14 with 2mol% LiCl as additive. From left to right the layer thickness increases from 85 to 145 nm;

Fig. 5       Optical transmittance of an AR-MgF$_2$-layer obtained from of example 8 with 5mol% Zr(O$i$Pr)$_4$ as additive. From left to right the layer thickness increases from 90 to 155 nm;

Fig.6       shows a HR-SEM photograph of a MgF$_2$-layer obtained from the sol of example 1);

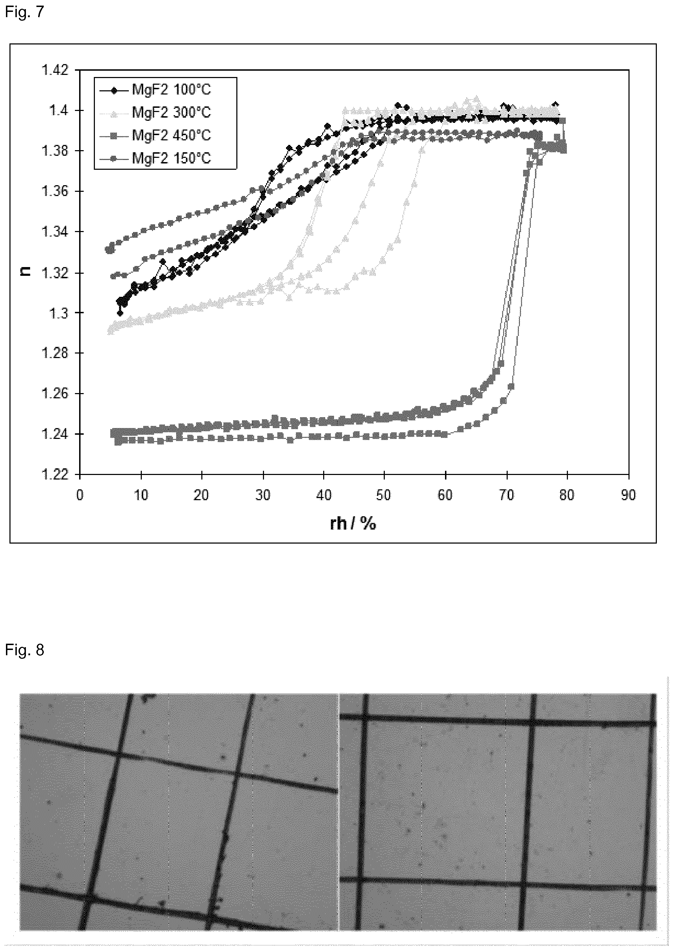

Fig. 7       displays the adsorption behaviour of a MgF$_2$-layer obtained from the sol of example 9). For the samples that has been calcined at 450°C, up to about 70% humidity in air nearly no water uptake can be found. In contrast, samples calcined at lower temperature start earlier to take up moisture;

Fig. 8       shows a MgF$_2$ coated surface of PET on which a certain grid mark was introduced by a cutter. The left panel displays the surface as prepared, the right panel shows the surface after adhering a normed adhesive film (TESA, Beiersdorf AG, Hamburg, Germany) and tearing off the tape. As can be seen, the coated MgF$_2$ layer remains un-affected;

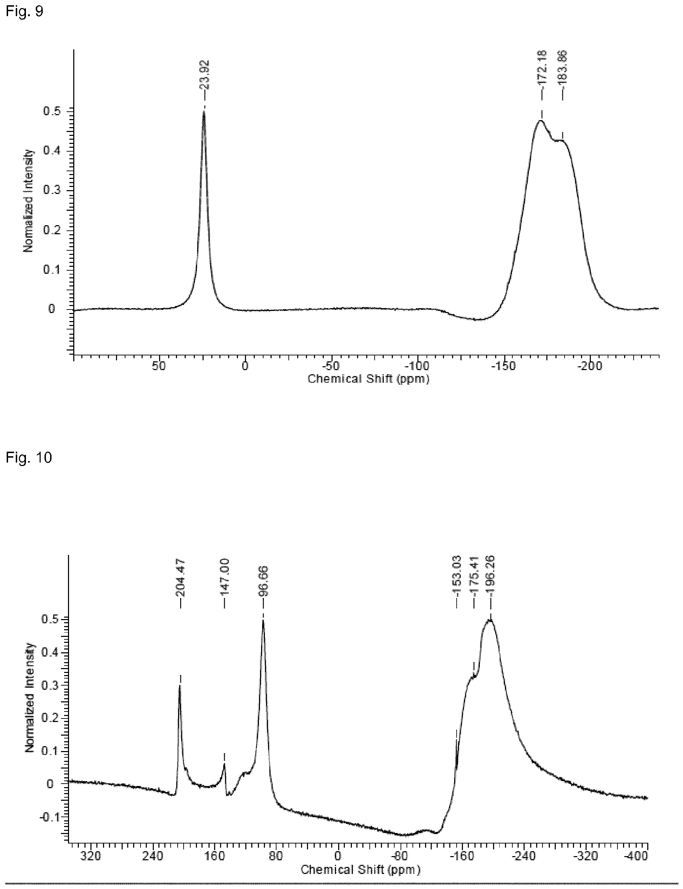

Fig. 9       shows a $^{19}$F-NMR-spectrum of a MgF$_2$ sol to which 5mol% Zr(O$^i$Pr)$_4$ was added with the characteristic chemical shift of F in ZrF$_4$ at -23.9 ppm;

Fig. 10       shows a typical $^{19}$F-NMR-spectrum of a MgF$_2$ sol with 5% Ti(O$^i$Pr)$_4$ as additive. Chemical shifts at $\sigma$=204ppm, $\sigma$=147ppm, and $\sigma$=96 are characteristic for Ti(O$^i$Pr)$_{4-x}$F$_x$ species, $\sigma$=-198 is for MgF$_2$.

Examples

**Synthesis of clear MgF$_2$-sols from magnesium acetates**

1) 28.5g dried magnesium acetate were dissolved in 450ml ethanol. Then, 50ml ethanol containing 8g anhydrous HF (aHF) were added under rigorous stirring. After 5 days stirring at room temperature, a nearly clear ethanolic MgF$_2$-sol with a concentration of 0.4 mol/l was obtained. The kinematic viscosity of the sol was 1.6mm$^2$ s$^{-1}$ and did not change over a period of 6 weeks. Alternatively, 810 ml ethanol and 13.7g anhydrous HF were used.

2) 27.0g dried magnesium acetate and 1g MgCl$_2$ were dissolved in 450ml ethanol. To this solution 50ml ethanol containing 8g aHF were added under rigorous stirring. After ca. 8 hours stirring at room temperature, a clear ethanolic MgF$_2$-sol with a concentration of 0.4 mol/l was obtained. The kinematic viscosity of the sol was 1.2 mm$^2$ s$^{-1}$, which increased slightly to 1.3 mm$^2$ s$^{-1}$ after 6 weeks. Alternatively, 790 ml ethanol and 13.4g anhydrous HF were used.

Following the same synthesis procedure, MgF$_2$-sols based on different amount of added MgCl$_2$ were obtained by changing the Mg(OOC$_2$H$_3$) to MgCl$_2$ ratio but keeping the added amount of HF and all the other reaction conditions constant.

These results are summarized in the table 1.

Table 1: Overall amount of ethanol - 860ml, overall HF amount - 13.4g

| Mg(OOC$_2$H$_3$) | MgCl$_2$ additive | clear after hours | viscosity mm$^2$s$^{-1}$ after 6 weeks | remarks |
|---|---|---|---|---|
| 27.57g | 0.32g (1 mol%) | 36 | 1.3 | |
| 27.00g | 1.00g (3 mol%) | 8 | 1.3 | |

3) 28.5g dried magnesium acetate were dissolved in 445ml ethanol. To this solution 50ml ethanol containing 8g aHF were added. This was followed by an immediate addition of a mixture of 5ml ethanol and 0.8g tetraethoxysilan (TEOS) under rigorous stirring. After 1 day stirring at room temperature, a clear ethanolic MgF$_2$-sol with a concentration of 0.4 mol/l containing 5mol% TEOS related to MgF$_2$ was obtained. The kinematic viscosity of the sol was 1.2 mm$^2$ s$^{-1}$, which increased slightly to 1.5 mm$^2$ s$^{-1}$ after 7 weeks. Alternatively, 800 ml ethanol and 13.7g anhydrous HF and 4.0 g TEOS in 10 ml ethanol were used. Following the same synthesis procedure, MgF$_2$-sols based on different amount of added TEOS were obtained by changing the Mg(OOC$_2$H$_3$) to TEOS ratio but keeping the added amount of HF and all the other reaction conditions constant. These results are summarized in the table 2.

Table 2: in all batches 28.5g magnesium acetate in 800 ml ethanol were used. Always 13.7g HF were used. The amount of added tetraethoxysilan (TEOS) in 10ml ethanol was varied.

| TEOS additive | clear after hours | viscosity mm$^2$s$^{-1}$ after 6 weeks | remarks |
|---|---|---|---|
| 0.8g (1 mol%) | 92 | 1.3 | |
| 4.0g (5 mol%) | 24 | 1.7 | Slightly increasing after 3 month |
| 8..0g (10 mol%) | 20 | 2.0 | Slightly increasing after 3 month |
| 16g (20 mol%) | 18 | 2.6 | after 3 month 7.3 |

4) 28.5g dried magnesium acetate were dissolved in 450ml ethanol. To this solution 2.1g tetraethoxysilan (TEOS) were added under rigorous stirring. Then, 50ml ethanol containing 8g aHF were added. Inside of 1 day stirring at room temperature, a clear ethanolic MgF$_2$-sol with a concentration of 0.4 mol/l containing 5mol% TEOS related to MgF$_2$ was obtained. The kinematic viscosity of the sol was 1.3 mm$^2$ s$^{-1}$ and kept constant over 6 weeks. Alternatively, 800 ml ethanol, 4.0 g TEOS and 13.7g anhydrous HF were used.

5) 28.5g dried magnesium acetate were dissolved in 450ml ethanol. To this solution 50ml ethanol containing 8g aHF were added. This was followed by an immediate addition of a 1.5g tetramethoxysilan (TMOS) under rigorous stirring. After 1 day stirring at room temperature, a clear ethanolic MgF$_2$-sol with a concentration of 0.4 mol/l containing 5mol% TMOS related to MgF$_2$ was obtained. The kinematic viscosity of the sol was 1.2 mm$^2$ s$^{-1}$, which increased slightly to 1.3 mm$^2$ s$^{-1}$ after 6 weeks. Alternatively, 800 ml ethanol and 13.7g anhydrous HF and 2.6 g TEOS in 10 ml ethanol were used.

6) 28.5g dried magnesium acetate were dissolved in 450ml ethanol. To this solution 1.5g tetramethoxysilan (TMOS) were added under rigorous stirring. Then, 50ml ethanol containing 8g aHF were added. Inside of 1 day stirring at room temperature, a clear ethanolic MgF$_2$-sol with a concentration of 0.4 mol/l containing 5mol% TMOS related to MgF$_2$ was obtained. The kinematic viscosity of the sol was 1.2 mm$^2$ s$^{-1}$ changing slightly to 1.3 over 8 weeks. Alternatively, 800 ml ethanol and 13.7g anhydrous HF and 2.6 g TEOS in 10 ml ethanol were used.

7) 28.5g dried magnesium acetate were dissolved in 450ml ethanol. To this solution 50ml ethanol containing 8g aHF were added. This was followed by an immediate addition of a 3.3g zirconium-n-propylat and 0.5g trifluoroacetic (TFA) acid under rigorous stirring. After 6 days stirring at room temperature, a clear ethanolic MgF$_2$-sol with a concentration of 0.4 mol/l containing 5mol% Zr(O$^n$Pr)$_4$ and 2% TFA related to MgF$_2$ was obtained. Alternatively, 800 ml ethanol, 13.7g anhydrous HF 5.5 g zirconium-n-propylat and 0.7 g TFA were used. Following the same synthesis procedure, MgF$_2$-sols based on different amount of added Zr(O$^n$R)$_4$ were obtained by changing the Mg(OOC$_2$H$_3$) to Zr(O$^n$R)$_4$ ratio but keeping the added amount of HF and all the other reaction conditions constant. These results are summarized in the table 3.

Table 3: In all batches 28.5g magnesium acetate in 800 ml ethanol were used. Always 13.7g HF were used. The amount of added $Zr(O^nR)_4$ plus 0.7g TFA in 10ml ethanol was varied.

| $Zr(O^nR)_4$ additive | clear after hours | viscosity $mm^2s^{-1}$ after 6 weeks | remarks |
|---|---|---|---|
| 5.5g (5 mol%) | 144 | 1.7 | |
| 11.0g (10 mol%) | 90 | 1.8 | Stable after 3 month |
| 22g (20 mol%) | 72 | 1.9 | after 3 month 3.3 |

8) 28.5g dried magnesium acetate and 3.3g zirconium-n-propylat were dissolved in 450ml ethanol. To this solution 50ml ethanol containing 8g aHF with 0.5g TFA were added. Inside of 5 days stirring at room temperature, a clear ethanolic $MgF_2$-sol with a concentration of 0.4 mol/l containing 5mol% $Zr(O^nR)_4$ and 2% TFA related to $MgF_2$ was obtained. The kinematic viscosity of the sol was 1.2 $mm^2 s^{-1}$ changing slightly to 1.3 over 8 weeks. Alternatively, 810 ml ethanol, 13.7g anhydrous HF 5.5 g zirconium-n-propylat and 0.7 g TFA were used.

9) 28.5g dried magnesium acetate were dissolved in 450ml ethanol. To this solution 50ml ethanol containing 8g aHF were added. This was followed by an immediate addition of a 2.8g titaniumisopropoxide and 0.4g TFA under rigorous stirring. After 7 days stirring at room temperature, a clear ethanolic $MgF_2$-sol with a concentration of 0.4 mol/l containing 5mol% $Ti(O^iR)_4$ related to $MgF_2$ was obtained. Alternatively, 800 ml ethanol, 13.7g anhydrous HF, 4.8 g titaniumisopropoxide and 0.7 g TFA in 10 ml ethanol were used. Following the same synthesis procedure, $MgF_2$-sols based on different amount of added $Ti(O^iR)_4$ were obtained by changing the $Mg(OOC_2H_3)$ to $Ti[OCH(CH_3)_2]_4$ ratio but keeping the added amount of HF and all the other reaction conditions constant. These results are summarized in the table 4.

Table 4: In all batches 28.5g magnesium acetate in 800 ml ethanol were used. Always 13.4g HF were used. The amount of added $Ti(O^iR)_4$ plus 0.7g TFA in 10ml ethanol was varied.

| $Ti[OCH(CH_3)_2]_4$ additive | clear after hours | viscosity $mm^2s^{-1}$ after 6 weeks | remarks |
|---|---|---|---|
| 4.9g (5 mol%) | 168 | 1.7 | Slightly increasing after 3 month |
| 19.6g (20 mol%) | 112 | 2.3 | after 3 month 3.7 |

10) 28.5g dried magnesium acetate and 2.8g $Ti(O^iR)_4$ were dissolved in 450ml ethanol. To this solution 50ml ethanol containing 8g aHF and 0.4g TFA were added. Inside of 1 day stirring at room temperature, a clear ethanolic $MgF_2$-sol with a concentration of 0.4 mol/l containing 5mol% $Ti(O^iR)_4$ and 2% TFA related to $MgF_2$ was obtained. The kinematic viscosity of the sol was 1.2 $mm^2 s^{-1}$ changing slightly to 1.3 over 8 weeks. Alternatively, 800 ml ethanol, 13.7g anhydrous HF, 4.8 g titaniumisopropoxide and 0.7 g TFA were used.

11) 28.5g dried magnesium acetate were dissolved in 450ml ethanol. To this solution 50ml ethanol containing 8g aHF were added. This was followed by an immediate addition of a 1.7g aluminium isopropoxide and 0.4g TFA under rigorous stirring. After 1 day stirring at room temperature, a clear ethanolic $MgF_2$-sol with a concentration of 0.4 mol/l containing 5mol% $Al(O^iPr)_3$ and 2% TFA related to $MgF_2$ was obtained. Alternatively, 800 ml ethanol, 13.7g anhydrous HF, 3.5 g aluminium isopropoxide and 0.7 g TFA were used. Following the same synthesis procedure, $MgF_2$-sols based on different amount of added $Al[OCH(CH_3)_2]_3$ were obtained by changing the $Mg(OOC_2H_3)$ to $Al[OCH(CH_3)_2]_3$ ratio but keeping the added amount of HF and all the other reaction conditions constant. These results are summarized in the table 5.

Table 5: In all batches 28.5g magnesium acetate in 800 ml ethanol were used. Always 13.7g HF were used. The amount of added $Al[OCH(CH_3)_2]_3$ plus 0.7g TFA in 10ml ethanol was varied.

| $Al[OCH(CH_3)_2]_3$ additive | clear after hours | viscosity $mm^2s^{-1}$ after 6 weeks | remarks |
|---|---|---|---|
| 2.2g (3 mol%) | 116 | 1.4 | |
| 3.5g (5 mol%) | 24 | 1.4 | |
| 13.9g (20 mol%) | 14 | 1.7 | after 3 month 1.9 |

12) 28.5g dried magnesium acetate and 1.7g aluminium isopropoxide were dissolved in 450ml ethanol. To this solution 50ml ethanol containing 8g aHF and 0.4g TFA were added. Inside of 21 days stirring at room temperature, a clear ethanolic $MgF_2$-sol with a concentration of 0.4 mol/l containing 5mol% $Al(O^iPr)_3$ and 2% TFA related to $MgF_2$ was obtained. The kinematic viscosity of the sol was 1.2 $mm^2$ $s^{-1}$ changing slightly to 1.3 over 8 weeks. Alternatively, 800 ml ethanol, 13.7g anhydrous HF, 3.4 g aluminium isopropoxide and 0.7 g TFA were used.

13) 28.5g dried magnesium acetate were dissolved in 450ml ethanol. To this solution 50ml ethanol containing 8g aHF were added. This was followed by an immediate addition of a 0.2g lithium chloride under rigorous stirring. After 1 day stirring at room temperature, a clear ethanolic $MgF_2$-sol with a concentration of 0.4 mol/l containing 2mol% LiCl related to $MgF_2$ was obtained. Alternatively, 800 ml ethanol, 13.7g anhydrous HF and 0.3 g lithium were used. Following the same synthesis procedure, $MgF_2$-sols based on different amount of added LiCl were obtained by changing the $Mg(OOC_2H_3)$ to LiCl ratio but keeping the added amount of HF and all the other reaction conditions constant. These results are summarized in the table 6.

Table 6: In all batches 28.5g magnesium acetate in 800 ml ethanol were used. Always 13.7g HF were used. The amount of added LiCl plus in 10ml ethanol was varied.

| LiCl additive | clear after hours | viscosity $mm^2s^{-1}$ after 6 weeks | remarks |
|---|---|---|---|
| 0.15g (1 mol%) | 52 | 1.3 | |
| 0.3g (2 mol%) | 24 | 1.4 | |
| 0.75g (5 mol%) | 18 | 1.4 | |

14) 28.5g dried magnesium acetate and 0.2g lithium chloride were dissolved in 450ml ethanol. To this solution 50ml ethanol containing 8g aHF were added. Inside of 1 day stirring at room temperature, a clear ethanolic $MgF_2$-sol with a concentration of 0.4 mol/l containing 2mol% LiCl related to $MgF_2$ was obtained. The kinematic viscosity of the sol was 1.2 $mm^2$ $s^{-1}$ changing slightly to 1.3 over 8 weeks. Alternatively, 810 ml ethanol, 13.7g anhydrous HF and 0.3 g lithium were used.

15) 54.9g magnesium acetate tetrahydrate were first dissolved in 450ml ethanol until a clear solution was formed. Then, 50ml ethanol containing 7.2g aHF (molar ratio HF:Mg=1.8) were added under rigorous stirring. A clear sol formed after 2 days. The kinematic viscosity of the sol was 1.3$mm^2$ $s^{-1}$ and did not change over a period of 8 weeks. Alternatively, 810 ml ethanol, 12.1g anhydrous HF and 52g magnesium acetate were used.

**Synthesis of clear $MgF_2$-sols from magnesium lactate**

16) 40.5g dried magnesium lactate were dissolved in 450ml ethanol. Then, 50ml ethanol containing 8g anhydrous HF (aHF) were added under rigorous stirring. After 14 days stirring at room temperature, a nearly clear ethanolic $MgF_2$-sol with a concentration of 0.4 mol/l was obtained. The kinematic viscosity of the sol was 1.5$mm^2$ $s^{-1}$ and did not change over a period of 6 weeks.

16a) 69.4 g dried magnesium lactate were dissolved in 450ml ethanol. Then, 50ml ethanol containing 13.7g anhydrous HF (aHF) were added under rigorous stirring. After 14 days stirring at room temperature, a turbid but not totally clear ethanolic $MgF_2$-sol with a concentration of 0.4 mol/l was obtained. The kinematic viscosity of the sol was 1.5$mm^2$ $s^{-1}$ that increased slightly over a period of 6 weeks to 2.7.

17) 40.5g dried magnesium lactate were dissolved in 450ml ethanol. To this solution 50ml ethanol containing 8g aHF were added under rigorous stirring. To this solution 1.7g aluminium isopropoxide and 0.4g TFA were added. After 5 days stirring at room temperature, a clear ethanolic $MgF_2$-sol with a concentration of 0.4 mol/l containing 5mol% $Al(O^iPr)_3$ and 2% TFA related to $MgF_2$ was obtained. The kinematic viscosity of the sol was 1.2 $mm^2$ $s^{-1}$, which increased slightly to 1.3 $mm^2$ $s^{-1}$ after 6 weeks. Alternatively, 800 ml ethanol, 13.7g anhydrous HF, 3.5g aluminium isopropoxide, 69.4g dried magnesium lactate and 0.7g TFA in 10ml ethanol were used.

18) 39.5g dried magnesium lactate and 0.5g $MgCl_2$ and 0.8g tetraethoxysilan (TEOS) were dissolved in 450ml ethanol. To this solution 50ml ethanol containing 8g aHF were added under rigorous stirring. After 1 day stirring at room temperature, a clear ethanolic $MgF_2$-sol with a concentration of 0.4 mol/l containing 5mol% TEOS related to $MgF_2$ was obtained. The kinematic viscosity of the sol was 1.2 $mm^2$ $s^{-1}$, which increased slightly to 1.3 $mm^2$ $s^{-1}$ after 6 weeks.

18a) 68.7g dried magnesium lactate and 0.3g $MgCl_2$ and 3.6g tetraethoxysilan (TEOS) were dissolved in 810ml ethanol. To this solution 50ml ethanol containing 13.7g aHF were added under rigorous stirring. After 1 day stirring at room temperature, a clear ethanolic $MgF_2$-sol with a concentration of 0.4 mol/l containing 5mol% TEOS related to $MgF_2$ was obtained. The kinematic viscosity of the sol was 1.2 $mm^2$ $s^{-1}$, which increased slightly to 1.7 $mm^2$ $s^{-1}$ after 6 weeks.

19) 39.5g dried magnesium lactate were dissolved in 450ml ethanol. To this solution 50ml ethanol containing 8g aHF were added. This was followed by an immediate addition of a 0.2g lithium chloride under rigorous stirring. After 2 days stirring at room temperature, a clear ethanolic $MgF_2$-sol with a concentration of 0.4 mol/l containing 2mol% LiCl related to $MgF_2$ was obtained. Alternatively, 810 ml ethanol, 13.7g anhydrous HF, 0.3 g lithium, 69.4g dried magnesium lactate and 0.7g TFA in 10ml ethanol were used.

20) 39.5g dried magnesium lactate and 0.2g lithium chloride were dissolved in 450ml ethanol. To this solution 50ml ethanol containing 8g aHF were added. Inside of 1 day stirring at room temperature, a clear ethanolic $MgF_2$-sol with a concentration of 0.4 mol/l containing 2mol% LiCl related to $MgF_2$ was obtained. The kinematic viscosity of the sol was 1.2 $mm^2$ $s^{-1}$ changing slightly to 1.3 over 8 weeks.

21) 62.4g dried magnesium lactate and 5.1g $Mg(NO_3)_2$ were dissolved in 810ml ethanol. To this solution 50ml ethanol containing 13.7g aHF were added under rigorous stirring. After 15h stirring at room temperature, a clear ethanolic $MgF_2$-sol with a concentration of 0.4 mol/l containing 20mo% nitric acid was obtained. The kinematic viscosity of the sol was 1.7 $mm^2$ $s^{-1}$, which increased significantly over 14 days to 37.7 $mm^2$ $s^{-1}$ forming a gel.

22) 62.4g dried magnesium lactate and 6.3g $MgBr_2$ were dissolved in 810ml ethanol. To this solution 50ml ethanol containing 13.7g aHF were added under rigorous stirring. After 10h stirring at room temperature, a clear ethanolic $MgF_2$-sol with a concentration of 0.4 mol/l containing 20mo% hydrobromic acid was obtained. The kinematic viscosity of the sol was 1.9 $mm^2$ $s^{-1}$, which increased significantly over 10 days to 31.3 $mm^2$ $s^{-1}$ resulting after 4 weeks in gel formation.

To a certain amount of dried magnesium acetate varying amounts of calcium additive were added and dissolved or suspended, respectively, to 450 ml ethanol before 50ml of a HF/ethanol were added. The overall molar amount of magnesium plus calcium precursor constantly summed up to 0.2 mol $M^{2+}$ (M= Mg + Ca), the added amount of HF was almost fixed to the stoichiometric ratio - if not mentioned differently - as given in the Table below. All these sols cleared up inside of 30 minutes up to 2 hours after HF addition.

Table 7: In all batches 0.2 mol (magnesium plus calcium) were applied in overall 500ml ethanol (after HF-addition). Thus, the concentration of alkaline earth metal (magnesium plus calcium) was always 0.4 mol/L. Always 8.0g HF were used.

| $Mg(OAc)_2$ in g | Ca-additive | clear after minutes | Viscosity after 4 weeks in $mm^2$ $s^{-1}$ | remarks |
|---|---|---|---|---|
| 25.6 | 2.22 g $CaCl_2$ | 20 | 1.8 | |
| 22.8 | 4.44 g $CaCl_2$ | 15 | 2.0 | |
| 18.5 | 7.77 g $CaCl_2$ | 6 | 2.8 | gelation tendency |
| 18.5 | 7.77 g $CaCl_2$ | 6 | 2.0 | HF/M ratio=1.95 |
| 14.2 | 11.1 g $CaCl_2$ | 5 | 3.1 | gelation tendency |
| 14.2 | 11.1 g $CaCl_2$ | 5 | 1.9 | HF/M ratio=1.9 |
| 25.6 | 3.1 g $Ca(OAc)_2$ | 100 | 1.7 | |
| 22.8 | 6.23 g $Ca(OAc)_2$ | 80 | 1.8 | |
| 18.5 | 11.1 g $Ca(OAc)_2$ | 70 | 1.8 | slightly opaque sol |
| 25.6 | 4.36 g $Ca(OLac)_2$ | 120 | 1.9 | |
| 22.8 | 8.72 g $Ca(OLac)_2$ | 100 | 2.1 | |
| 18.5 | 15.3 g $Ca(OLac)_2$ | 90 | 2.3 | slightly opaque sol |
| 14.2 | 21.8 g $Ca(OLac)_2$ | 90 | 2.4 | slightly opaque sol |

**Formation of the acetic acid ethyl ester**

Table 8: Shows the formation of the acetic acid ethyl ester for 3 representative sols. After ca. 4 month the ester equilibrium seems to be established in all these sols

| sol | 1 week | 4 weeks | 16 weeks | 24 weeks |
|---|---|---|---|---|
| $MgF_2$ sol with 5% Ti$(O^iPr)_4$ | 1% ester 99% acid | 13% ester 87% acid | 30% ester 70% acid | 30% ester 70% acid |
| $MgF_2$ sol with 5% Zr $(O^nPr)_4$ | 3% ester 97% acid | 12% ester 88% acid | 33% ester 70% acid | 33% ester 67% acid |
| $MgF_2$ sol with 5% Al $(O^iPr)_3$ | 2% ester 98% acid | 12% ester 88% acid | 31% ester 69% acid | 31% ester 69% acid |

**Formation of $MgF_2$-AR-layers on glass substrates**

The general procedure of producing AR-layers based on sols obtained according the procedures described under 1) to 22) followed the following general protocol. Optiwhite glass substrates of 100 x150mm were dip-coated with the respective $MgF_2$-sol. Before dip coating the substrates were cleaned with an alkaline cleaning solution and finally neutralized by washing with de-ionized water. After a drying step at 80°C for 10 min all samples were finally annealed at 450°C for 15 min.

**Formation of AR-layers on Polymer surfaces**

The durability of the $MgF_2$ sols obtained according the procedures 1) to 22) was performed by dip-coating technique. Plates/foils of several polymers (PET, FEP, PES, PC, ETFE, PMMA, PC Lexan, Zeonex, Makrolon, Polycarbonate) were generally first cleaned by treating them with different organic solvents and then either directly coated without any further treatment or Corona pre-treated or in some cases, a mediator layer made from either Ormosil@ or Silazanes was first deposited in order to improve the grafting properties.

**Characterization of the $MgF_2$-sols**

The hydrodynamic diameter of the nano particles was determined by dynamic light scattering (DLS) measurements using a Zetasizer Nano ZS (Malvern Instruments, Worcestershire, UK) using quartz cuvettes flushed with an argon atmosphere. The viscosity was determined simultaneous to DLS measurements with a microviscometer from Anton Paar (AMVn; Graz, Austria) at 25°C. Hydrodynamic diameters were calculated by deconvolution of the correlation functions into exponential functions using non-negatively constrained least squares (NNLS) fitting algorithm as implemented in the Malvern Nanosizer software. The zeta potential was determined from the electrophoretic mobilities of the particles in the sol using the Smoluchowski relation.

**Characterization of the $MgF_2$-AR-layers**

The refractive indices and the optical transmission and reflectance, respectively, were determined by ellipsometric measurements with a variable angle UV-Vis spectroscopic ellipsometer SE850 of the company SENTECH Instruments GmbH in the wavelength range between 350 nm and 1000 nm. For the evaluation and fitting of the refraction indices n and the absorption k were used the data set in the visible range (350-800 nm) using the CAUCHY model. The reported refractive indices were taken at a wavelength of 589 nm.

The mechanical stability of the AR-layers was tested with a crockmeter (Linartester 249) from ERICHSEN GmbH & Co KG, Germany. As an example, the scratch resistance of a $CaF_2$-layer obtained from a sol prepared according synthesis procedure 3) was determined. The layer remained un-affected after 100 passes with a felt tester or after 100 passes by a steel wool tester.

$^{19}F$ MAS NMR spectra were recorded on a Bruker Avance 400. The chemical shifts of the nuclei are given with respect to $CFCl_3$ for $^{19}F$.

XRD measurements were performed with the FPM7 equipment (Rich. Seiffert & Co., Freiberg) with Cu K$\alpha$ (Cu K$\alpha$1.2, $\lambda$ = 1.542 Å) radiation (2$\Theta$ range: 5° $\leq$ 2$\Theta$ $\leq$ 64°).

All the sols described under 1) to 22) gave AR-layers which do not differ remarkably from each other based on simple eye inspection. The characteristic data of the $MgF_2$-Ar-layers made are summarized in Table 9.

Table 9 summarizes the main characteristics of AR layers on Optiwhite glass

| Sol | | | | Layer | | |
|---|---|---|---|---|---|---|
| Synth. | Compos. mol% | Viscosity mm$^2$s$^{-1}$ | Particle-Ø [nm] | n | Crockmeter* strokes | XRD |
| 1 | 100%$MgF_2$ | 1.6 | 8-12 | 1.28 | 100 | weak $MgF_2$ reflexes |
| 2 | 100%$MgF_2$ | 1.2 | 6-11 | 1.25 | 500 | weak $MgF_2$ reflexes |
| 4 | 100%$MgF_2$ 5%TEOS | 1.3 | 10-18 | 1.30 | 350 | weak $MgF_2$ reflexes |
| 4' | 100%$MgF_2$ 10% TEOS | 1,5 | 8-15 | 1,32 | 550 | weak $MgF_2$ reflexes |
| 4" | 100%$MgF_2$ 20% TEOS | 1,6 | 9-15 | 1,33 | 650 | weak $MgF_2$ reflexes |
| 8 | 100$MgF_2$,2%TFA, 5%Zr$(O^nR)_4$ | 1.2-1.3 | 7-10 | 1.30 | 200 | weak $MgF_2$ reflexes |
| 8' | 100$MgF_2$,2%TFA, 10%Zr$(O^nPr)_4$ | 1.4 | 7-10 | 1.33 | 500 | weak $MgF_2$ reflexes |
| 8" | 100$MgF_2$,2%TFA, 5%Zr$(O^nR)_4$ | 1.2-1.3 | 7-10 | 1.36 | 600 | weak $MgF_2$ reflexes |
| 10 | 100$MgF_2$/2%TFA 5% Ti$(O^iR)_4$ | 1.2-1.3 | 10-16 | 1.31 | 900 | weak $MgF_2$ reflexes |
| 10' | 100$MgF_2$/2%TFA 10% Ti$(O^iR)_4$ | 1.2-1.4 | 10-14 | 1.34 | 1100 | weak $MgF_2$ reflexes |
| 10" | 100$MgF_2$/2%TFA 20% Ti$(O^iR)_4$ | 1.3-1.4 | 10-14 | 1.37 | 1200 | weak $MgF_2$ reflexes |
| 13 | 100$MgF_2$ 2%LiCl | 1.5 | 7-12 | 1.26 | 800 | weak $MgF_2$ reflexes |
| 13 | 100$MgF_2$ 5%LiCl | 1.5 | 7-12 | 1.26 | 800 | weak $MgF_2$ reflexes |
| 13 | 100$MgF_2$ 10%LiCl | 1.8 | 7-12 | 1.26 | 800 | weak $MgF_2$ reflexes |
| 15 | 90%$MgF_2$, 10%Mg$(OAc)_2$ | 1.4 | 6-8 | 1,31 | 100 | weak $MgF_2$ reflexes |
| 16 | 100% $MgF_2$ | 1.5-1.7 | 9-13 | 1.30 | 50 | X-ray amorphous |
| 18 | 100%$MgF_2$ 5%TEOS | 1.2-1.3 | 5-9 | 1.29 | 150 | X-ray amorphous |
| 19 | 100$MgF_2$ 2%LiCl | 1,4 | 4-8 | 1.28 | 500 | X-ray amorphous |

(continued)

| Sol | | | | Layer | | |
|---|---|---|---|---|---|---|
| Synth. | Compos. mol% | Viscosity $mm^2s^{-1}$ | Particle-Ø [nm] | n | Crockmeter* strokes | XRD |
| 21 | 100% $MgF_2$ | 1.4 | 4-7 | 1.26 | 900 | X-ray amorphous |
| The crockmeter test is a normalized method probing the scratch resistance of a coated layer. For this, a planar coated substrate (100 x 150mm) is fixed inside a commercial crockmeter and then subjected to a defined number of abrasion cycles (up to 500). *Crockmeter: the number of strokes at which first scratches can be seen but at which the optical layer still is present is given. | | | | | | |

## Claims

1. A method for obtaining a magnesium fluoride ($MgF_2$) sol solution, comprising the steps of

   a. providing magnesium carboxylate in a non-aqueous solvent in a first volume and
   b. adding, in a second volume, 1.85 to 2.05 molar equivalents of anhydrous hydrogen fluoride (HF) per mole magnesium carboxylate to said first volume, wherein

   at least one metal additive, selected from the group of lithium, calcium, antimony, tin, magnesium, strontium, aluminium, silicium, zirconium, titanium or zinc, is added before, during or after step b), wherein the amount of said metal additive, in relation to the amount of magnesium, is 1 : 100 to 1 : 5, as measured in molar equivalent of said metal additive to magnesium, wherein
   an additional amount of hydrogen fluoride ($n_{adHF}$) is present in step b computed according to the formula

$$n_{adHF} = (n_M * \chi_{additive}) * Ox * A,$$

   wherein

   - $n_M$ is the molar amount of magnesium,
   - $X_{additive}$ is the molar percentage of said metal additive in relation to $n_M$,
   - $X_{additive}$ is in the range of 1 % to 20 %,
   - Ox is the number characterizing the oxidation state of said metal additive, and
   - A is selected from $0 \leq A \leq 1$, and wherein,

   the water content of the sol solution is equal to or lower than 2.5 molar equivalents in relation to the molar magnesium content of the solution.

2. A method for obtaining a magnesium fluoride ($MgF_2$) sol solution, comprising the steps of

   a providing a magnesium precursor in a first volume in a non-aqueous solvent, and
   b adding, in a second volume, 1.85 to 2.05 molar equivalents of anhydrous hydrogen fluoride (HF) per mole magnesium precursor to said first volume, and
   c adding a metal additive before, during or after step b), wherein said metal additive is calcium, in form of a calcium precursor, wherein

   - the amount of said metal additive, in relation to the amount of said magnesium precursor is 1 : 100 to 1 : 1, as measured in molar equivalents of said metal additive to said magnesium precursor, and wherein

   - in case the magnesium precursor is a magnesium alkoxide, the amount of said metal additive, in relation to the amount of said magnesium precursor, is more than 1 : 5 up to 1 : 1, as measured in molar equivalents of said metal additive to said magnesium precursor, and wherein

- additionally 1.85 to 2.05 molar equivalents of anhydrous hydrogen fluoride ($n_{HF_c}$) per mole metal additive is present in said second volume wherein,

the water content of the sol solution is equal to or lower than 2.5 molar equivalents in relation to the sum of the magnesium and metal additive content of the solution.

3. The method according to claim 2, **characterized in that** at least one metal additive, selected from the group of lithium, antimony, tin, magnesium, strontium, aluminium, silicium, zirconium, titanium or zinc, is added additionally to a calcium additive in form of a metal additive precursor before, during or after step b), wherein the amount of said metal additive precursor, in relation to the amount of magnesium and calcium, is 1 : 100 to 1 : 5, as measured in molar equivalent of said metal additive to the sum of magnesium and calcium, wherein

- an additional amount of hydrogen fluoride ($n_{adHF}$) is present in step b computed according to the formula

$$n_{adHF} = (n_M * \chi_{additive}) * Ox * A,$$

wherein

- $n_M$ is the sum of the molar amounts of magnesium and calcium,
- $\chi_{additive}$ is the molar percentage of said metal additive in relation to $n_M$,
- $\chi_{additive}$ is in the range of 1 % to 20 %, and
- Ox is the number characterizing the oxidation state of said metal additive, and
- A is selected from $0 \leq A \leq 1$.

4. The method according to any one of the previous claims, wherein said metal additive precursor is selected from the group comprised of $MgCl_2$, $Mg(OAc)_2$, $CaCl_2$, $Ca(OLac)_2$, $Ca(NO_3)$, $LiCl$, $Li(OC_2H_5)$, $C_8H_{20}O_4Si$, $Zr(O^nPr)_4$, $Ti(O^iPr)_4$, $Al(O^iPr)_3$, $Sb(OAc)_3$, $AlCl_3$, $Sn(OAc)_2$, $SnCl_2$, $Sb(OC_2H_5)_3$, and $SbCl_3$.

5. A magnesium fluoride sol solution comprising an amount of $MgF_2$ particles and an amount of additive particles **characterized by** a general formula $MF_mB_{x-m}$, wherein M is selected from $Li^+$, $Mg^{2+}$, $Ca^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3+}$ and $Sb^{5+}$, B is an anionic ligand, x is equal to the oxidation state of the metal M and m is equal to or smaller than the oxidation state of the metal M
wherein the sol solution comprises

I. an amount of calcium particles in the range of 1 : 100 to 1 : 1, as measured in molar equivalent of calcium to magnesium, or
II. an amount of calcium particles in the range of 1 : 100 to 1 : 1, as measured in molar equivalent of calcium to magnesium and an amount of additive particles in the range of 1 : 100 to 1 : 5, as measured in molar equivalent of additive to the sum of magnesium and calcium, or
III. an amount of additive particles in the range of 1 : 100 to 1 : 5, as measured in molar equivalent of additive to magnesium, wherein

the water content of the sol solution is equal to or lower than 2.5 molar equivalents in relation to the molar magnesium content or the sum of magnesium and calcium of the solution.

6. The magnesium fluoride sol solution according to claim 5, wherein B is selected from the group comprising an alcoholate (RO-), a carboxylate (RCOO-), an alkoxycarbonate, a nitrate or a halide anion, selected from chloride, bromide or iodide, or their partially fluorinated species.

7. The magnesium fluoride sol solution according to any one of the claims 5 to 6 comprising $MgF_2$ particles smaller than 20 nm in a non-aqueous solvent and/or calcium particles that are smaller than 15 nm in diameter and/or metal additive particles that are smaller than 20 nm in diameter.

8. The magnesium fluoride sol solution according to any one of the claims 5 to 7, **characterized in that** the sol solution has a magnesium content exceeding 1 mol/l and/or is stable at room temperature for more than six weeks.

9. A method for coating a surface, comprising the steps of

a. providing a magnesium fluoride sol solution obtainable by a method according to any of claims 1 to 4, or a magnesium fluoride sol solution according to any of claims 5 to 8,

b. contacting said surface with said magnesium fluoride sol solution,

c. drying said surface,

d. exposing said surface to a first thermal step, wherein said surface is exposed to a first temperature ranging from 15°C to 500°C.

**10.** A surface coating on a substrate comprising sintered magnesium fluoride nanoparticles having a diameter size of lower than 20 nm, a refractive index of between $n_{500}$= 1.19 and $n_{500}$= 1.30 and a porosity between 25% and 40%, wherein the surface coating comprises

a. an amount of magnesium particles in the range of 1 : 100 to 1 : 1, as measured in molar equivalent of magnesium to calcium, or

b. an amount of magnesium particles in the range of 1 : 100 to 1 : 1, as measured in molar equivalent of magnesium to calcium and an amount of additive particles in the range of 1 : 100 to 1 : 5, as measured in molar equivalent of additive to the sum of magnesium and calcium, or

c. an amount of additive particles in the range of 1 : 100 to 1 : 5, as measured in molar equivalent of additive to magnesium.

**11.** The surface coating on a substrate according to claim 10, comprising $MF_mB_{x-m}$ particles, wherein M is selected from the group of $Li^+$, $Mg^{2+}$, $Ca^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3+}$, $Sb^{5+}$, B is an anionic ligand, x is equal to the oxidation state of the metal M and m is equal to or smaller than the oxidation state of the metal M.

**12.** The surface coating on a substrate according to any one of the claims 10 or 11, comprising $M^{n+}B_x$ metal additive particles, wherein $M^{n+}$ is selected from the group of $Li^{1+}$, $Mg^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3/5+}$ and B can be an inorganic or organic compound, wherein x is any integer of 1, 2, 3, 4, 5 or 6 and the metal additive particles comprise an amount of 1:5 to 1: 100, as measured in molar equivalent of additive to magnesium.

**13.** The surface coating on a substrate according to any one of the claims 10 to 12, wherein the surface coating comprises an amount of chloride in the range of 1.0 % to 5.5 % as measured with an potentiometric determination of the solid layer with respect to the remaining elements of the surface coating.

**14.** A glass or polymer surface comprising a surface coating according to claim 10.

**Patentansprüche**

**1.** Ein Verfahren zur Gewinnung einer Magnesiumfluorid-($MgF_2$)-Sollösung, umfassend die Schritte

a. des Bereitstellens von Magnesiumcarboxylat in einem nichtwässrigen Lösungsmittel in einem ersten Volumen und

b. des Hinzufügens, in einem zweiten Volumen, von 1,85 bis 2,05 molaren Äquivalenten wasserfreien Fluorwasserstoffs (HF) pro Mol Magnesiumcarboxylat zu dem ersten Volumen, wobei

mindestens ein Metalladditiv, ausgewählt aus der Gruppe von Lithium, Calcium, Antimon, Zinn, Magnesium, Strontium, Aluminium, Silizium, Zirkonium, Titan oder Zink, vor, während oder nach Schritt b) zugegeben wird, wobei die Menge des Metalladditivs in Bezug auf die Menge des Magnesiums 1 : 100 bis 1 : 5 beträgt, gemessen in molarem Äquivalent des Metalladditivs zu Magnesium, wobei eine zusätzliche Menge an Fluorwasserstoff ($n_{adHF}$) in Schritt b vorhanden ist, berechnet nach der Formel

$$n_{adHF} = (n_M * \chi_{additive}) * Ox * A,$$

wobei

- $n_M$ die molare Menge an Magnesium ist,
- $\chi_{additive}$ der molare Prozentanteil des Metalladditivs in Bezug auf $n_M$ ist,
- $\chi_{additive}$ im Bereich von 1 % bis 20 % liegt,

- Ox die Zahl, die die Oxidationsstufe des Metalladditivs charakterisiert, ist, und
- A aus $0 \leq A \leq 1$ ausgewählt ist, und wobei,

der Wassergehalt der Sollösung gleich oder kleiner als 2,5 molare Äquivalente in Bezug auf den molaren Magnesiumgehalt der Lösung ist.

2. Ein Verfahren zur Gewinnung einer Magnesiumfluorid-($MgF_2$)-Sollösung, umfassend die Schritte

 a des Bereitstellens eines Magnesiumprekursoren in einem nichtwässrigen Lösungsmittel in einem ersten Volumen, und
 b des Hinzufügens, in einem zweiten Volumen, von 1,85 bis 2,05 molaren Äquivalenten wasserfreien Fluorwasserstoffs (HF) pro Mol Magnesiumprekursor zu dem ersten Volumen, und
 c des Hinzufügens eines Metalladditivs vor, während oder nach Schritt b), wobei das Metalladditiv Calcium in Form eines Calciumprekursors ist, wobei

  - die Menge des Metalladditivs in Bezug auf die Menge des Magnesiumprekursors 1 : 100 bis 1 : 1 beträgt, gemessen in molaren Äquivalenten des Metalladditivs zum Magnesiumprekursor, und wobei

  - für den Fall, dass der Magnesiumprekursor ein Magnesiumalkoxid ist, die Menge des Metalladditivs in Bezug auf die Menge des Magnesiumprekursors mehr als 1 : 5 bis 1 : 1 beträgt, gemessen in molaren Äquivalenten des Metalladditivs zum Magnesiumprekursor, und wobei
  - zusätzlich 1.85 bis 2.05 molare Äquivalente wasserfreien Fluorwasserstoffs ($n_{HFc}$) pro Mol Metalladditiv in dem zweiten Volumen vorhanden ist, wobei

der Wassergehalt der Sollösung gleich oder kleiner als 2,5 molare Äquivalente in Bezug auf die Summe des Magnesium- und Metalladditivgehalts der Lösung ist.

3. Das Verfahren nach Anspruch 2, **dadurch gekennzeichnet, dass** mindestens ein Metalladditiv, ausgewählt aus der Gruppe von Lithium, Antimon, Zinn, Magnesium, Strontium, Aluminium, Silizium, Zirkonium, Titan oder Zink, zusätzlich zu einem Calciumadditiv in Form eines Metalladditivprekursors vor, während oder nach Schritt b) zugegeben wird, wobei die Menge des Metalladditivprekursors in Bezug auf die Menge an Magnesium und Calcium 1 : 100 bis 1 : 5 beträgt, gemessen in molarem Äquivalent des Metalladditivs zu der Summe von Magnesium und Calcium, wobei

  - eine zusätzliche Menge an Fluorwasserstoff ($n_{adHF}$) in Schritt b vorhanden ist, berechnet nach der Formel

$$n_{adHF} = (n_M * \chi_{additive}) * Ox * A,$$

 wobei

  - $n_M$ die Summe der molaren Mengen an Magnesium und Calcium ist,
  - $\chi_{additive}$ der molare Prozentanteil des Metalladditivs in Bezug auf $n_M$ ist,
  - $\chi_{additive}$ im Bereich von 1 % bis 20 % liegt, und
  - Ox die Zahl, die die Oxidationsstufe des Metalladditivs charakterisiert, ist, und
  - A aus $0 \leq A \leq 1$ ausgewählt ist.

4. Das Verfahren nach einem der vorhergehenden Ansprüche, wobei der Metalladditivprekursor ausgewählt ist aus der Gruppe aufweisend $MgCl_2$, $Mg(OAc)_2$, $CaCl_2$, $Ca(OLac)_2$, $Ca(NO_3)$, $LiCl$, $Li(OC_2H_5)$, $C_8H_{20}O_4Si$, $Zr(O^nPr)_4$, $Ti(O^iPr)_4$, $Al(O^iPr)_3$, $Sb(OAc)_3$, $AlCl_3$, $Sn(OAc)_2$, $SnCl_2$, $Sb(OC_2H_5)_3$, und $SbCl_3$.

5. Eine Magnesiumfluoridsollösung, umfassend eine Menge an $MgF_2$-Partikeln und eine Menge an Additivpartikeln, **gekennzeichnet durch** die allgemeine Formel $MF_mB_{x-m}$, wobei M ausgewählt ist aus $Li^+$, $Mg^{2+}$, $Ca^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3+}$ und $Sb^{5+}$, B ein anionischer Ligand ist, x gleich der Oxidationsstufe des Metalls M ist und m gleich oder kleiner als die Oxidationsstufe des Metalls M ist wobei die Sollösung umfasst

  I. eine Menge an Calciumpartikeln im Bereich von 1 : 100 bis 1 : 1, gemessen in molarem Äquivalent von Calcium zu Magnesium, oder

II. eine Menge an Calciumpartikeln im Bereich von 1 : 100 bis 1 : 1, gemessen in molarem Äquivalent von Calcium zu Magnesium und eine Menge an Additivpartikeln im Bereich von 1 : 100 bis 1 : 5, gemessen in molarem Äquivalent des Additivs zur Summe von Magnesium und Calcium, oder

III. eine Menge an Additivpartikeln im Bereich von 1 : 100 bis 1 : 5, gemessen in molarem Äquivalent des Additivs zu Magnesium, wobei

der Wassergehalt der Sollösung gleich oder kleiner als 2,5 molare Äquivalente in Bezug auf den molaren Magnesiumgehalt oder die Summe aus Magnesium und Calcium der Lösung ist.

6. Die Magnesiumfluoridsollösung nach Anspruch 5, wobei B ausgewählt ist aus der Gruppe umfassend ein Alkoholat (RO-), ein Carboxylat (RCOO-), ein Alkoxycarbonat, ein Nitrat oder Halogenidanion, ausgewählt aus Chlorid, Bromid oder Iodid, oder deren teilfluorierte Spezies.

7. Die Magnesiumfluoridsollösung nach einem der Ansprüche 5 bis 6, umfassend $MgF_2$-Partikel kleiner als 20 nm in einem nichtwässrigen Lösungsmittel und/oder Calciumpartikel, deren Durchmesser weniger als 15 nm beträgt, und/oder Metalladditivpartikel, deren Durchmesser weniger als 20 nm beträgt.

8. Die Magnesiumfluoridsollösung nach einem der Ansprüche 5 bis 7, **dadurch gekennzeichnet, dass** die Sollösung einen Magnesiumgehalt von mehr als 1 mol/l aufweist und/oder bei Raumtemperatur für mehr als sechs Wochen stabil ist.

9. Ein Verfahren zum Beschichten einer Oberfläche, umfassend die Schritte

a. des Bereitstellens einer Magnesiumfluoridsollösung, die durch ein Verfahren nach einem der Ansprüche 1 bis 4 erhältlich ist, oder einer Magnesiumfluoridsollösung nach einem der Ansprüche 5 bis 8,
b. des Kontaktierens der Oberfläche mit der Magnesiumfluorid-Sollösung,
c. des Trocknens der Oberfläche,
d. des Aussetzens der Oberfläche einem ersten thermischen Schritt, wobei die Oberfläche einer ersten Temperatur im Bereich von 15°C bis 500°C ausgesetzt ist.

10. Eine Oberflächenbeschichtung auf einem Substrat, umfassend gesinterte Magnesiumfluorid-Nanopartikel mit einer Durchmessergröße von weniger als 20 nm, einem Brechungsindex zwischen $n_{500} = 1{,}19$ und $n_{500} = 1{,}30$ und einer Porosität zwischen 25% und 40%, wobei die Oberflächenbeschichtung umfasst

a. eine Menge an Magnesiumpartikeln im Bereich von 1 : 100 bis 1 : 1, gemessen in molarem Äquivalent von Magnesium zu Calcium, oder
b. eine Menge an Magnesiumpartikeln im Bereich von 1 : 100 bis 1 : 1, gemessen in molarem Äquivalent von Magnesium zu Calcium und eine Menge an Additivpartikeln im Bereich von 1 : 100 bis 1 : 5, gemessen in molarem Äquivalent des Additivs zur Summe von Magnesium und Calcium, oder
c. eine Menge an Additivpartikeln im Bereich von 1 : 100 bis 1 : 5, gemessen in molarem Äquivalent des Additivs zu Magnesium.

11. Die Oberflächenbeschichtung auf einem Substrat nach Anspruch 10, umfassend $MF_mB_{x-m}$-Partikel, wobei M ausgewählt ist aus der Gruppe von $Li^+$, $Mg^{2+}$, $Ca^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3+}$, $Sb^{5+}$, B ein anionischer Ligand ist, x gleich der Oxidationsstufe des Metalls M ist und m gleich oder kleiner als die Oxidationsstufe des Metalls M ist.

12. Die Oberflächenbeschichtung auf einem Substrat nach einem der Ansprüche 10 oder 11, umfassend $M^{n+}B_x$-Metalladditivpartikel, wobei $M^{n+}$ ausgewählt ist aus der Gruppe von $Li^{1+}$, $Mg^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3/5+}$ und B eine anorganische oder organische Verbindung sein kann, wobei x eine beliebige ganze Zahl von 1, 2, 3, 4, 5 oder 6 ist und die Metalladditivpartikel eine Menge von 1:5 bis 1: 100 aufweisen, gemessen in molarem Äquivalent des Additivs zu Magnesium.

13. Die Oberflächenbeschichtung auf einem Substrat nach einem der Patentansprüche 10 bis 12, wobei die Oberflächenbeschichtung eine Menge an Chlorid im Bereich von 1,0 % bis 5,5 % umfasst, gemessen mit einer potentiometrischen Bestimmung der festen Schicht in Bezug auf die übrigen Elemente der Oberflächenbeschichtung.

14. Eine Glas- oder Polymeroberfläche, umfassend eine Oberflächenbeschichtung nach Anspruch 10.

**Revendications**

1. Procédé permettant d'obtenir une solution d'un sol de fluorure de magnésium (MgF$_2$) comprenant les étapes consistant à

   a. se munir d'un carboxylate de magnésium dans un solvant non aqueux à un premier volume et
   b. ajouter, à un deuxième volume, de 1,85 à 2,05 équivalents molaires de fluorure d'hydrogène (HF) anhydre par mole de carboxylate de magnésium au dit premier volume, où

   au moins un additif métallique, sélectionné dans le groupe consistant en le lithium, le calcium, l'antimoine, l'étain, le magnésium, le strontium, l'aluminium, le silicium, le zirconium, le titane ou le zinc, est ajouté avant, pendant ou après l'étape b, où la quantité dudit additif métallique, rapportée à la quantité de magnésium, va de 1 : 100 à 1 : 5, telle que mesurée en équivalents molaires dudit additif métallique rapporté au magnésium, où
   une quantité additionnelle de fluorure d'hydrogène ($n_{adHF}$) est présente à l'étape b, calculée selon la formule

$$n_{adHF} = (n_M * X_{additif}) * Ox * A,$$

   où

   - $n_M$ est la quantité molaire de magnésium,
   - $X_{additif}$ est le pourcentage molaire dudit additif métallique rapporté à $n_M$,
   - $X_{additif}$ est dans la plage de 1 % à 20 %,
   - Ox est le nombre caractérisant l'état d'oxydation dudit additif métallique et
   - A est sélectionné parmi $0 \leq A \leq 1$, et où

   la teneur en eau de la solution de sol, rapportée à la teneur molaire en magnésium de la solution, est inférieure ou égale à 2,5 équivalents molaires.

2. Procédé permettant d'obtenir une solution d'un sol de fluorure de magnésium (MgF$_2$) comprenant les étapes consistant à

   a se munir d'un précurseur de magnésium à un premier volume dans un solvant non aqueux et
   b ajouter, à un deuxième volume, de 1,85 à 2,05 équivalents molaires de fluorure d'hydrogène (FH) anhydre par mole du précurseur de magnésium au dit premier volume et
   c ajouter un additif métallique avant, pendant ou après l'étape b, où ledit additif métallique est le calcium sous la forme d'un précurseur de calcium, où

   - la quantité dudit additif métallique, rapportée à la quantité dudit précurseur de magnésium, va de 1 : 100 à 1 : 1, telle que mesurée en équivalents molaires dudit additif métallique rapportée au dit précurseur de magnésium, et où

   - dans le cas où le précurseur de magnésium est un alkoxyde de magnésium, la quantité dudit additif métallique, rapportée à la quantité dudit précurseur de magnésium, est supérieure à 1 : 5 et va jusqu'à 1 : 1, telle que mesurée en équivalents molaires dudit additif métallique rapporté au dit précurseur de magnésium, et où
   - de 1,85 à 2,05 équivalents molaires de fluorure d'hydrogène anhydre ($n_{HFc}$) par mole d'additif métallique sont en outre présents dans ledit deuxième volume, où

   la teneur en eau de la solution de sol, rapportée à la somme des teneurs en magnésium et en additif métallique de la solution, est inférieure ou égale à 2,5 équivalents molaires.

3. Procédé selon la revendication 2, **caractérisé en ce que** un au moins additif métallique, sélectionné dans le groupe consistant en le lithium, l'antimoine, l'étain, le magnésium, le strontium, l'aluminium, le silicium, le zirconium, le titane ou le zinc, est ajouté avant, pendant ou après l'étape b, où la quantité du précurseur dudit additif métallique, rapportée à la quantité de magnésium et de calcium, va de 1 : 100 à 1 : 5, telle que mesurée en équivalents molaires dudit additif métallique rapportée à la somme du magnésium et du calcium, où

- une quantité additionnelle de fluorure d'hydrogène ($n_{adHF}$) est présente à l'étape b, calculée selon la formule

$$n_{adHF} = (n_M * X_{additif}) * Ox * A,$$

où

- $n_M$ est la somme des quantités molaires de magnésium et de calcium,
- $X_{additif}$ est le pourcentage molaire dudit additif métallique rapporté à $n_M$,
- $X_{additif}$ est dans la plage de 1 % à 20 % et
- Ox est le nombre caractérisant l'état d'oxydation dudit additif métallique et
- A est sélectionné parmi $0 \le A \le 1$.

4. Procédé selon l'une quelconque des revendications précédentes, où le précurseur dudit additif métallique est sélectionné dans le groupe consistant en $MgCl_2$, $Mg(OAc)_2$, $CaCl_2$, $Ca(OLac)_2$, $Ca(NO_3)$, LiCl, $Li(OC_2H_5)$, $C_8H_{20}OZr(O^nPr)_4$, $Ti(O^iPr)_4$, $Al(O^iPr)_3$, $Sb(OAc)_3$, $AlCl_3$, $Sn(OAc)_2$, $SnCl_2$, $Sb(OC_2H_5)_3$ et $SbCl_3$.

5. Solution d'un sol de fluorure de magnésium comprenant une quantité de particules de $MgF_2$ et une quantité de particules d'un additif **caractérisé par** une formule générale $MF_mB_{x-m}$, où M est sélectionné parmi $Li^+$, $Mg^{2+}$, $Ca^{2+}$, $Sr^{2+}$, $Sn^{2+}$, $Zn^{2+}$, $Al^{3+}$, $Si^{4+}$, $Ti^{4+}$, $Zr^{4+}$, $Sb^{3+}$ et $Sb^{5+}$, B est un ligand anionique, x est égal à l'état d'oxydation du métal M et m est inférieur ou égal à l'état d'oxydation du métal M où la solution de sol comprend

    I. une quantité de particules de calcium dans la plage de 1 : 100 à 1 : 1, telle que mesurée en équivalents molaires de calcium rapportés au magnésium, ou

    II. une quantité de particules de calcium dans la plage de 1 : 100 à 1 : 1, telle que mesurée en équivalents molaires de calcium rapportés au magnésium, et une quantité de particules d'un additif dans la plage de 1 : 100 à 1 : 5, telle que mesurée en équivalents molaires d'additif rapportés à la somme de magnésium et de calcium, ou

    III. une quantité de particules d'un additif dans la plage de 1 : 100 à 1 : 5, telle que mesurée en équivalents molaires d'additif rapportés au magnésium, où

la teneur en eau de la solution de sol, rapportée à la teneur molaire en magnésium ou à la somme des teneurs en magnésium et en calcium de la solution, est inférieure ou égale à 2,5 équivalents molaires.

6. Solution d'un sol de fluorure de magnésium selon la revendication 5, où B est sélectionné dans le groupe comprenant un anion alcoolate (RO-), un carboxylate (ROOO-), un alkoxycarbonate, un nitrate ou un halogénure sélectionné parmi un chlorure, bromure ou iodure
ou des espèces partiellement fluorées de ceux-ci.

7. Solution d'un sol de fluorure de magnésium selon l'une quelconque des revendications 5 à 6 comprenant des particules de $MgF_2$ d'une taille inférieure à 20 nm dans un solvant non aqueux et/ou des particules de calcium d'un diamètre inférieur à 15 nm et/ou des particules d'un additif d'un diamètre inférieur à 20 nm.

8. Solution d'un sol de fluorure de magnésium selon l'une quelconque des revendications 5 à 7, **caractérisée en ce que** la solution de sol a une teneur en magnésium excédant 1 mole/l et/ou est stable à température ambiante pendant plus de six semaines.

9. Procédé de revêtement d'une surface comprenant les étapes consistant à

    a. se munir d'une solution d'un sol de fluorure de magnésium obtenable par un procédé selon l'une quelconque des revendications 1 à 4 ou d'une solution d'un sol de fluorure de magnésium selon l'une quelconque des revendications 5 à 8,
    b. mettre en contact ladite surface avec ladite solution d'un sol de fluorure de magnésium,
    c. sécher ladite surface,
    d. exposer ladite surface à une première étape thermique, où ladite surface est exposée à une première température qui va de 15 °C à 500 °C.

10. Revêtement de surface sur un substrat comprenant des nanoparticules de fluorure de magnésium fritté ayant un diamètre inférieur à 20 nm, un indice de réfraction entre $n_{500} = 1,19$ et $n_{500} = 1,30$ et une porosité entre 25 % et 40 %, où le revêtement de surface comprend

    a. une quantité de particules de magnésium dans la plage de 1 : 100 à 1 : 1, telle que mesurée en équivalents molaires de magnésium rapportés au calcium, ou

    b. une quantité de particules de magnésium dans la plage de 1 : 100 à 1 : 1, telle que mesurée en équivalents molaires de magnésium rapportés au calcium, et une quantité de particules d'un additif dans la plage de 1 : 100 à 1 : 5, telle que mesurée en équivalents molaires d'additif rapportés à la somme de magnésium et de calcium, ou

    c. une quantité de particules d'un additif dans la plage de 1 : 100 à 1 : 5, telle que mesurée en équivalents molaires d'additif rapportés au magnésium.

11. Revêtement de surface sur un substrat selon la revendication 10 comprenant des particules de $MF_m B_{x-m}$, où M est sélectionné dans le groupe consistant en $Li^+$, $Mg^{2+}$, $Ca^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3+}$, $Sb^{5+}$, B est un ligand anionique, X est égal à l'état d'oxydation du métal M et m est inférieur ou égal à l'état d'oxydation du métal M.

12. Revêtement de surface sur un substrat selon l'une quelconque des revendications 10 ou 11 comprenant les particules d'un additif métallique $M^{n+}B_x$, où $M^{n+}$ est sélectionné dans le groupe consistant en $Li^{1+}$, $Mg^{2+}$, $Sr^{2+}$, $Sn^{2+}$, $Zn^{2+}$, $Al^{3+}$, $Si^{4+}$, $Ti^{4+}$, $Zr^{4+}$, $Sn^{4+}$, $Sb^{3/5+}$ et B peut être un composé inorganique ou organique, où x est tout nombre entier parmi 1, 2, 3, 4, 5 ou 6 et où les particules de l'additif métallique comprennent une quantité qui va de 1 : 5 à 1 : 100, telle que mesurée en équivalents molaires de l'additif rapportés au magnésium.

13. Revêtement de surface sur un substrat selon l'une quelconque des revendications 10 à 12, où le revêtement de surface comprend une quantité de chlorure, rapportée aux éléments restants du revêtement de surface, dans la plage de 1,0 % à 5,5 %, telle que mesurée par une détermination potentiométrique de la couche solide.

14. Surface de verre ou de polymère comprenant un revêtement de surface selon la revendication 10.

Fig. 1

Fig. 2

Fig. 3

Fig 4

Fig. 5

Fig 6

Fig. 7

Fig. 8

Fig. 9

Fig. 10

## REFERENCES CITED IN THE DESCRIPTION

**Patent documents cited in the description**

- DE 102007058927 A1
- US 6880602 B2
- EP 1315005 B1
- WO 2011116980 A1
- US 20110122497 A1
- EP 1791002 A1
- EP 2253590 A1

**Non-patent literature cited in the description**

- **S. FUJIHARA.** Handbook of Sol-Gel Science and Technology. Kluwer, 2005, vol. 1, 203-224